(19) Europäisches Patentamt
European Patent Office
Office européen des brevets

(11) **EP 4 456 458 A1**

(12) **EUROPEAN PATENT APPLICATION**
published in accordance with Art. 153(4) EPC

(43) Date of publication:
**30.10.2024 Bulletin 2024/44**

(21) Application number: **22909722.5**

(22) Date of filing: **05.12.2022**

(51) International Patent Classification (IPC):
**H04L 1/00** $^{(2006.01)}$    **H04B 7/0413** $^{(2017.01)}$

(52) Cooperative Patent Classification (CPC):
**H04B 7/0413; H04L 1/00**

(86) International application number:
**PCT/CN2022/136615**

(87) International publication number:
**WO 2023/116407 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.12.2021 CN 202111605575**

(71) Applicant: **Datang Mobile Communications Equipment Co., Ltd.**
**Beijing 100085 (CN)**

(72) Inventors:
• **LIU, Zhengxuan**
**Beijing 100085 (CN)**
• **GAO, Qiubin**
**Beijing 100085 (CN)**
• **JIN, Liqiang**
**Beijing 100085 (CN)**

(74) Representative: **Studio Torta S.p.A.**
**Via Viotti, 9**
**10121 Torino (IT)**

(54) **INFORMATION PROCESSING METHOD AND APPARATUS, TERMINAL, AND NETWORK DEVICE**

(57)    An information processing method and an information processing apparatus, a terminal and a network device are provided, and relate to the field of communication technology. The method includes: receiving, by a terminal, a downlink signal sent by a network device; determining, by the terminal, a first network model according to the downlink signal; wherein the first network model is at least one of I network models which are pre-deployed or are downloaded from the network device side, where I is a positive integer; encoding, by the terminal, first channel information through the first network model, to obtain to-be-transmitted encoded data; and processing, by the terminal, the encoded data and then sending, by the terminal, data resulting from the processing of the encoded data to the network device.

Fig. 3

## Description

## CROSS-REFERENCE TO RELATED APPLICATION

The present application claims a priority to the Chinese patent application No. 202111605575.2 filed in China on December 25, 2021, a disclosure of which is incorporated herein by reference in its entirety.

## TECHNICAL FIELD

The present disclosure relates to the field of communication technology, and in particular, to an information processing method, an information processing apparatus, a terminal and a network device.

## BACKGROUND

In Massive Multi Input Multi Output (Massive MIMO) systems, artificial intelligence-based neural networks can be used for compressed feedback of channel information, such as compressed feedback of Channel State Information (CSI). For example, in order to reduce feedback overhead, an encoder module may be used for compressing the channel information by exploiting the sparsity of channel information, and then a decoder module is used for restoring the channel information that is similar to the original channel information. In order to adapt to changes in channel information of different users, reduce terminal feedback overhead or improve system performance, deploying multiple network models including encoders and/or decoders on the terminal side and/or network device side is a solution being considered. However, there is currently no solution to the problem of how the terminal side and/or the network device side performs channel information transmission through the network models when multiple network models are deployed on the terminal side and/or the network device side.

## SUMMARY

The present disclosure provides an information processing method and an information processing apparatus, a terminal and a network device, to solve the problem of how channel information transmission is performed using a network model on the terminal side and/or network device side when multiple network models are deployed on the terminal side and/or network device side.

An embodiment of the present disclosure provides an information processing method, including:

receiving, by a terminal, a downlink signal sent by a network device;
determining, by the terminal, a first network model according to the downlink signal; wherein the first network model is at least one of I network models that are pre-deployed or downloaded from the network device side, and I is a positive integer;
encoding, by the terminal, first channel information through the first network model, to obtain to-be-transmitted encoded data; and
processing, by the terminal, the encoded data and then sending, by the terminal, data resulting from the processing of the encoded data to the network device.

Optionally, the downlink signal is a downlink reference signal; and the determining, by the terminal, the first network model according to the downlink signal includes:

determining, by the terminal, the first channel information according to the downlink reference signal; and
determining, by the terminal, the first network model according to the first channel information.

Optionally, after the determining, by the terminal, the first network model according to the first channel information, the method further includes:

sending, by the terminal, a first uplink signal to the network device; wherein the first uplink signal carries first indication information used for indicating the first network model.

Optionally, the first channel information includes L pieces of channel information, where L is a positive integer, wherein

in case that different pieces of channel information are encoded and/or decoded through different network models, the first indication information includes N1 bits, and the N1 bits are used for indicating the network models corresponding to the different pieces of channel information respectively, wherein

$$N1 = \left\lceil \log_2(C_I^L) \right\rceil$$;

in case that different pieces of channel information are encoded and/or decoded through a same network model, the first indication information includes N2 bits, and the N2 bits are used for indicating the same network model, wherein N2 = $\left\lceil \log_2(I) \right\rceil$

Optionally, the determining, by the terminal, the first network model according to the first channel information includes:

performing, by the terminal, encoding and/or decoding based on the first channel information through the I network models respectively, to obtain second channel information corresponding to each network model;

calculating, by the terminal, a target parameter corresponding to each network model based on the first channel information and the second channel information corresponding to each network model;

in case that the I network models include M ≥ 1 network model whose target parameter meets a preset condition, selecting, by the terminal, from the M network models a network model through which the encoding yields the encoded data having a smallest quantity of elements, and determining, by the terminal, the selected network model as the first network model;

in case that the I network models include M=0 network model whose target parameter meets the preset condition, selecting, by the terminal, from the I network models a network model through which the encoding yields the encoded data having a largest quantity of elements, and determining, by the terminal, the selected network model as the first network model.

Optionally, the calculating, by the terminal, the target parameter corresponding to each network model based on the first channel information and the second channel information corresponding to each network model includes:

calculating, by the terminal through a target criterion, the target parameter corresponding to each network model based on the first channel information and the second channel information corresponding to each network model;
wherein the target criterion is a cosine similarity criterion, or the target criterion is a normalized mean square error criterion, or the target criterion is a broadband signal to interference and noise ratio criterion.

Optionally, the downlink signal carries second indication information used for indicating the first network model; before the receiving, by the terminal, the downlink signal sent by the network device, the method further includes:

sending, by the terminal, a second uplink signal to the network device; wherein the second uplink signal is used by the network device to determine the first network model.

Optionally, the second uplink signal is an uplink reference signal; or the second uplink signal carries a Precoding Matrix Indicator (PMI).

Optionally, the first channel information includes L pieces of channel information, and L is a positive integer; wherein, the $l$-th channel information among the L pieces of channel information includes one of the followings:

downlink channel information $H_l$ corresponding to an $l$-th receiving antenna in a first frequency domain unit, wherein, $H_l \in \mathbb{C}^{N_c \times N_t}$, $l \in \{1, ..., P1\}$, $N_t$ is a quantity of transmitting antenna ports of the network device, $N_c$ is a quantity of frequency domain units in the first frequency domain unit, $P1$ is a quantity of receiving antennas of the terminal;

a received signal $Y_l$ of a downlink reference signal passing through a channel that is received by the $l$-th receiving antenna in the first frequency domain unit, wherein $Y_l \in \mathbb{C}^{N_c \times N_t}$, $l \in \{1, ..., P1\}$;

an $l$-th eigenvector $U_l$ obtained by a singular value decomposition of downlink channel information in the first frequency domain unit, wherein $U_l \in \mathbb{C}^{N_c \times N_t}$, $l \in \{1, ..., P2\}$, $P2$ is a quantity of eigenvectors;

a precoding vector $V_l$ of an $l$-th data stream in the first frequency domain unit, wherein $V_l \in \mathbb{C}^{N_c \times N_t}$, $l \in \{1, ..., P3\}$, $P3$ is a quantity of data streams;

a combination of precoding vectors of R data streams in the first frequency domain unit, wherein L= 1;

a combination of received signals of a downlink reference signal passing through channels that correspond to R receiving antennas respectively in the first frequency domain unit, wherein L=1;

a combination of pieces of downlink channel information corresponding to the R receiving antennas respectively in the first frequency domain unit, wherein L=1;

a combination of R eigenvectors obtained by a singular value decomposition of the downlink channel information in the first frequency domain unit, wherein L= 1;

a combination of precoding vectors of R data streams in the first frequency domain unit and (vl-R) zero vectors $0_j$, wherein L=1, $0_j \in \mathbb{C}^{N_c \times N_t}$, $j \in \{R + 1, ..., v1\}$, v1 is a maximum quantity of data streams that the terminal is capable of transmitting;

a combination of the pieces of downlink channel information corresponding to the R receiving antennas respectively in the first frequency domain unit and (v2-R) zero vectors, wherein L=1, v2 is a maximum quantity of receiving antennas of the terminal;

a combination of the received signals of the downlink reference signal passing through the channels that correspond to the R receiving antennas respectively in the first frequency domain unit and the (v2-R) zero vectors, wherein L=1;

a combination of the R eigenvectors obtained by the singular value decomposition of the downlink channel information in the first frequency domain unit and the (vl-R) zero vectors, wherein L=1;

channel information $\breve{H}_l$ obtained by a two-dimensional Fourier transformation of the channel information in the first frequency domain unit, wherein

$$\breve{H}_l \in \mathbb{C}^{N_c \times N_t}, l \in \{1, ...,P2\};$$

partial channel information $\hat{H}_l$ retained after truncating channel information in the frequency domain of the $\breve{H}_l$, wherein,

$$\hat{H}_l \in \mathbb{C}^{N_c' \times N_t}, N_c' < N_c;$$

wherein the first frequency domain unit is all frequency domain units or one frequency domain unit.

Optionally, the frequency domain unit is one subcarrier, or the frequency domain unit is one Physical Resource Block (PRB), or the frequency domain unit is one sub-band including multiple PRBs.

Optionally, the processing, by the terminal, the encoded data and then sending, by the terminal, data resulting from the processing of the encoded data to the network device includes:

performing, by the terminal, quantization processing on a first element in the encoded data, and transmitting, by the terminal, quantized data to the network device; wherein the first element is part or all of the elements in the encoded data.

Optionally, the first element includes one of the followings:

$K_1$ non-zero element in the encoded data, wherein $K_1$ is a positive integer, $K_1 \leq K_0$, $K_0$ is a quantity of all elements in the encoded data;
$K_1$ elements in the encoded data that are determined based on a mask vector;
consecutive $K_1$ elements starting from a first position in the encoded data.

Optionally, the first channel information includes L pieces of channel information, and L≥1; the method further includes one of the followings:

when L≥1, sending, by the terminal, third indication information to the network device, wherein one piece of channel information corresponds to one piece of third indication information, and the third indication information is used for indicating a quantity of the first element and/or a position of the first element in the encoded data;
when L> 1, in case that the quantity of the first element and/or the position of the first element in the encoded data resulting from encoding a first partial channel information is the same, sending, by the terminal, common fourth indication information for the first partial channel information to the network device, wherein the fourth indication information is used for indicating the quantity of the first element and/or the position of the first element in the encoded data; the first partial channel information is part or all of the L pieces of channel information;
when L> 1, sending, by the terminal, fifth indication information indicating for the L pieces of channel information jointly to the network device, wherein the fifth indication information is used for indicating the quantity of the first element and/or the position of the first element in the encoded data resulting from encoding each piece of channel information; or, the fifth indication information is used for indicating a total quantity of the first elements in L encoded data resulting from encoding the L pieces of channel information and/or positions of the first elements in the encoded data.

Optionally, in case that the first element includes the $K_1$ non-zero element in the encoded data,

in case that $K_1 < K_0$, the third indication information or the fourth indication information is used for indicating the quantity $K_1$ of the non-zero element and a position of the $K_1$ non-zero element in the encoded data;
in case that $K_1=K_0$, the third indication information or the fourth indication information is used for indicating the quantity $K_1$ of the non-zero element.

Optionally, the third indication information or the fourth indication information includes N3 bits, the N3 bits are used for indicating the quantity $K_1$ of the first elements, wherein $N3= \lceil \log_2(K_0) \rceil$.

Optionally, in case that the first element includes the $K_1$ elements in the encoded data that are determined based on a mask vector, or consecutive $K_1$ elements starting from the first position in the encoded data, the third indication information or the fourth indication information includes N4 bits, the N4 bits are used for indicating a quantity $K_2$ of non-zero element in the $K_1$ elements, and the third indication information or the fourth indication information is also used for indicating a position of the $K_2$ non-zero element in the encoded data, wherein $N4= \lceil \log_2(K_1) \rceil$, $K_2 \leq K_1$.

Optionally, the fifth indication information includes N5 bits, and the N5 bits are used for indicating the quantity of the first element in the encoded data resulting from encoding each piece of channel information; wherein $N5= \lceil \log_2(\overline{K}) \rceil$, $\overline{K}$ is a maximum quantity of reported elements in each encoded data;
or,

the fifth indication information includes N6 bits, and the N6 bits are used for indicating a total quantity of the first elements in the L encoded data; wherein N6= $\lceil \log_2(\overline{K}_{tot}) \rceil$, $\overline{K}_{tot}$ is a maximum total quantity of reported elements in the L encoded data.

Optionally, after the determining, by the terminal, the first network model according to the downlink signal, the method further includes:

> obtaining, by the terminal, restored second channel information through the first network model based on data resulting from the processing of the encoded data;
> calculating, by the terminal, a Channel Quality Indicator (CQI) based on the second channel information; and
> sending, by the terminal, the CQI to the network device.

Optionally, after the determining, by the terminal, the first network model according to the downlink signal, the method further includes:

> receiving, by the terminal, a beamformed channel information reference signal sent by the network device, wherein a beam used by the channel information reference signal is determined based on channel information restored by the network device;
> determining, by the terminal, valid channel information based on the channel information reference signal;
> calculating, by the terminal, a CQI based on the valid channel information;
> sending, by the terminal, the CQI to the network device.

Optionally, the information processing method also includes:
sending, by the terminal, interference-and-noise-related information of a downlink channel to the network device, wherein the interference-and-noise-related information of the downlink channel is used by the network device to calculate a CQI.

An embodiment of the present disclosure provides an information processing method, including:

> sending, by a network device, a downlink signal to a terminal, wherein the downlink signal is used by the terminal to determine a first network model, and the first network model is at least one of I pre-deployed network models, where I is a positive integer;
> receiving, by the network device data resulting from the terminal's processing of encoded data, wherein the encoded data is obtained by the terminal after encoding first channel information according to the first network model;

> determining, by the network device, to-be-decoded data based on the data resulting from the terminal's processing of the encoded data;
> decoding, by the network device, the to-be-decoded data according to the first network model to obtain restored channel information.

Optionally, the downlink signal is a downlink reference signal; and before the decoding, by the network device, the to-be-decoded data according to the first network model to obtain the restored channel information, the method further includes:

> receiving, by the network device, the first uplink signal sent by the terminal;
> determining, by the network device, the first network model based on the first uplink signal.

Optionally, the downlink signal carries second indication information used for indicating the first network model, and before the sending, by the network device, the downlink signal to the terminal, the method further includes:

> receiving, by the network device, a second uplink signal sent by the terminal;
> determining, by the network device, third channel information based on the second uplink signal;
> determining, by the network device, the first network model based on the third channel information.

Optionally, the second uplink signal is an uplink reference signal; or, the second uplink signal carries a Precoding Matrix Indicator (PMI).

Optionally, the determining, by the network device, the first network model based on the third channel information includes:

> performing, by the network device, encoding and/or decoding based on the third channel information through the I network models respectively to obtain fourth channel information corresponding to each network model;
> calculating, by the network device, a target parameter corresponding to each network model based on the third channel information and the fourth channel information corresponding to each network model;
> in case that the I network models include M ≥ 1 network model whose target parameter meets a preset condition, selecting, by the network device, from the M network models a network model through which the encoding yields the encoded data having a smallest quantity of elements, and determining, by the network device, the selected network model as the first network model;
> in case that the I network models include M=0 network model whose target parameter meets the preset condition, selecting, by the network device, from the I network models a network model through which the encoding yields the encoded data having a largest quantity of elements, and determining, by the network device, the selected network model as the first network model.

Optionally, the calculating, by the network device, the target parameter corresponding to each network model based on the third channel information and the fourth channel information corresponding to each network model includes:

calculating, by the network device through a target criterion, the target parameter corresponding to each network model based on the third channel information and the fourth channel information corresponding to each network model;
wherein the target criterion is a cosine similarity criterion, or the target criterion is a normalized mean square error criterion, or the target criterion is a broadband signal to interference and noise ratio criterion.

Optionally, the first channel information includes L pieces of channel information, where L is a positive integer, wherein

in case that different pieces of channel information are encoded and/or decoded through different network models, the second indication information includes N1 bits, and the N1 bits are used for indicating the network models corresponding to the different pieces of channel information respectively, wherein

$$N1 = \lceil \log_2(C_I^L) \rceil$$
;

in case that different pieces of channel information are encoded and/or decoded through a same network model, the second indication information includes N2 bits, and the N2 bits are used for indicating the same network model, wherein N2 = $\lceil \log_2(I) \rceil$

Optionally, the first channel information includes L pieces of channel information, and L≥1, and before the determining, by the network device, the to-be-decoded data based on the data resulting from the terminal's processing of the encoded data, the method also includes one of the followings:

when L≥1, receiving, by the network device, third indication information sent by the terminal, wherein one piece of channel information corresponds to one piece of third indication information, and the third indication information is used for indicating a quantity of first element and/or a position of the first element in the encoded data, wherein the first element is part or all of elements in the encoded data;

when L> 1, receiving, by the network device, common fourth indication information sent by the terminal for first partial channel information; wherein the first partial channel information is part or all of the L pieces of channel information, and the quantity of the first element and/or the position of the first element in the encoded data resulting from encoding the first partial channel information is the same, the fourth indication information is used for indicating the quantity of the first element and/or the position of the first element in the encoded data;
when L> 1, receiving, by the network device, fifth indication information sent by the terminal that indicates for the L pieces of channel information jointly, wherein the fifth indication information is used for indicating the quantity of the first element and/or the position of the first element in the encoded data resulting from encoding each piece of channel information; or, the fifth indication information is used for indicating a total quantity of the first elements in L encoded data resulting from encoding the L pieces of channel information and/or positions of the first elements in the encoded data.

Optionally, the first element includes one of the followings:

$K_1$ non-zero element in the encoded data, wherein $K_1$ is a positive integer, $K_1 \leq K_0$, $K_0$ is a quantity of all elements in the encoded data;
$K_1$ elements in the encoded data that are determined based on a mask vector;
consecutive $K_1$ elements starting from a first position in the encoded data.

Optionally, the determining, by the network device, the to-be-decoded data based on the data resulting from the terminal's processing of the encoded data includes:

performing, by the network device, dequantization processing on the data resulting from the terminal's processing of the encoded data to obtain de-quantized data;
determining, by the network device, the to-be-decoded data based on the de-quantized data through the third indication information, or the fourth indication information, or the fifth indication information.

Optionally, the determining, by the network device, the to-be-decoded data based on the de-quantized data through the third indication information, or the fourth indication information, or the fifth indication information includes one of the followings:

determining, by the network device, the to-be-decoded data based on the de-quantized data through a mask vector;

determining, by the network device, the to-be-decoded data based on the de-quantized data through the quantity of the first element;

determining, by the network device, the to-be-decoded data based on the de-quantized data through the position of the first element in the encoded data;

determining, by the network device, the to-be-decoded data based on the de-quantized data through a quantity of non-zero element and a position of the non-zero element in the encoded data;

determining, by the network device, the to-be-decoded data based on the de-quantized data through the quantity of the first element, a quantity of non-zero element among the first element and the position of the non-zero element in the encoded data.

Optionally, the information processing method also includes:
receiving, by the network device, Channel Quality Indicator (CQI) sent by the terminal.

Optionally, the information processing method also includes:

sending, by the network device, a beamformed channel information reference signal to the terminal; wherein a beam used by the channel information reference signal is determined based on the channel information restored by the network device;

receiving, by the network device, the CQI sent by the terminal; wherein the CQI is calculated by the terminal according to the channel information reference signal.

Optionally, the information processing method also includes:

receiving, by the network device, interference-and-noise-related information of a downlink channel sent by the terminal;

calculating, by the network device, CQI based on the interference-and-noise-related information of the downlink channel and the restored channel information.

An embodiment of the present disclosure provides an information processing apparatus, including a memory, a transceiver, and a processor;

wherein the memory is configured to store a computer program; the transceiver is configured to send and receive data under the control of the processor; the processor is configured to read the computer program in the memory and perform the following operations:
receiving a downlink signal sent by a network device; determining a first network model according to the downlink signal; wherein the first network model is at least one of I network models that are pre-deployed or downloaded from the network device side, and I is a positive integer;

encoding first channel information through the first network model, to obtain to-be-transmitted encoded data; and

processing the encoded data and then sending data resulting from the processing of the encoded data to the network device.

Optionally, the downlink signal is a downlink reference signal; the processor is configured to read the computer program in the memory and perform the following operations:

determining the first channel information according to the downlink reference signal; and
determining the first network model according to the first channel information.

Optionally, the processor is configured to read the computer program in the memory and perform the following operation:

sending a first uplink signal to the network device, wherein the first uplink signal carries first indication information used for indicating the first network model.

Optionally, the first channel information includes L pieces of channel information, where L is a positive integer, wherein

in case that different pieces of channel information are encoded and/or decoded through different network models, the first indication information includes N1 bits, and the N1 bits are used for indicating the network models corresponding to the different pieces of channel information respectively, wherein

$$N1 = \lceil \log_2(C_I^L) \rceil;$$

in case that different pieces of channel information are encoded and/or decoded through a same network model, the first indication information includes N2 bits, and the N2 bits are used for indicating the same network model, wherein N2 = $\lceil \log_2(I) \rceil$

Optionally, the processor is configured to read the computer program in the memory and perform the following operations:

performing encoding and/or decoding based on the first channel information through the I network models respectively, to obtain second channel information corresponding to each network model;
calculating a target parameter corresponding to each network model based on the first channel information and the second channel information corresponding to each network model;

in case that the I network models include M ≥ 1 network model whose target parameter meets a preset condition, selecting from the M network models a network model through which the encoding yields the encoded data having a smallest quantity of elements, and determining the selected network model as the first network model;

in case that the I network models include M=0 network model whose target parameter meets the preset condition, selecting from the I network models a network model through which the encoding yields the encoded data having a largest quantity of elements, and determining the selected network model as the first network model.

Optionally, the processor is configured to read the computer program in the memory and perform the following operation:

Calculating, through a target criterion, the target parameter corresponding to each network model based on the first channel information and the second channel information corresponding to each network model;

wherein the target criterion is a cosine similarity criterion, or the target criterion is a normalized mean square error criterion, or the target criterion is a broadband signal to interference and noise ratio criterion.

Optionally, the downlink signal carries second indication information used for indicating the first network model; the processor is configured to read the computer program in the memory and perform the following operation:

sending a second uplink signal to the network device, wherein the second uplink signal is used by the network device to determine the first network model.

Optionally, the second uplink signal is an uplink reference signal; or the second uplink signal carries a Precoding Matrix Indicator (PMI).

Optionally, the first channel information includes L pieces of channel information, and L is a positive integer; wherein, the $l$-th channel information among the L pieces of channel information includes one of the followings:

downlink channel information $H_l$ corresponding to an $l$-th receiving antenna in a first frequency domain unit, wherein, $H_l \in \mathbb{C}^{N_c \times N_t}$, $l \in \{1, ..., P1\}$, $N_t$ is a quantity of transmitting antenna ports of the network device, $N_c$ is a quantity of frequency domain units in the first frequency domain unit, $P1$ is a quantity of receiving antennas of the terminal;

a received signal $Y_l$ of a downlink reference signal passing through a channel that is received by the $l$-th receiving antenna in the first frequency domain unit, wherein $Y_l \in \mathbb{C}^{N_c \times N_t}$, $l \in \{1, ..., P1\}$;

an $l$-th eigenvector $U_l$ obtained by a singular value decomposition of downlink channel information in the first frequency domain unit, wherein $U_l \in \mathbb{C}^{N_c \times N_t}$, $l \in \{1, ..., P2\}$, $P2$ is a quantity of eigenvectors;

a precoding vector $V_l$ of an $l$-th data stream in the first frequency domain unit, wherein $V_l \in \mathbb{C}^{N_c \times N_t}$, $l \in \{1, ..., P3\}$, $P3$ is a quantity of data streams;

a combination of precoding vectors of R data streams in the first frequency domain unit, wherein L= 1;

a combination of received signals of a downlink reference signal passing through channels that correspond to R receiving antennas respectively in the first frequency domain unit, wherein L=1;

a combination of pieces of downlink channel information corresponding to the R receiving antennas respectively in the first frequency domain unit, wherein L=1;

a combination of R eigenvectors obtained by a singular value decomposition of the downlink channel information in the first frequency domain unit, wherein L= 1;

a combination of precoding vectors of R data streams in the first frequency domain unit and (v1-R) zero vectors $0_j$, wherein L=1, $0_j \in \mathbb{C}^{N_c \times N_t}$, $j \in \{R + 1, ..., v1\}$, v1 is a maximum quantity of data streams that the terminal is capable of transmitting;

a combination of the pieces of downlink channel information corresponding to the R receiving antennas respectively in the first frequency domain unit and (v2-R) zero vectors, wherein L=1, v2 is a maximum quantity of receiving antennas of the terminal;

a combination of the received signals of the downlink reference signal passing through the channels that correspond to the R receiving antennas respectively in the first frequency domain unit and the (v2-R) zero vectors, wherein L=1;

a combination of the R eigenvectors obtained by the singular value decomposition of the downlink channel information in the first frequency domain unit and the (v1-R) zero vectors, wherein L=1;

channel information $\breve{H}_l$ obtained by a two-dimensional Fourier transformation of the channel information in the first frequency domain unit, wherein $\breve{H}_l \in \mathbb{C}^{N_c \times N_t}$, $l \in \{1, ..., P2\}$;

partial channel information $\hat{\mathbb{H}}_l$ retained after truncating channel information in the frequency domain of

the $\tilde{\mathbb{H}}_l'$, wherein, $\hat{\mathbb{H}}_l \in \mathbb{C}^{N_c \times N_t}$, $N_c < N_c'$; wherein the first frequency domain unit is all frequency domain units or one frequency domain unit.

Optionally, the frequency domain unit is one subcarrier, or the frequency domain unit is one Physical Resource Block (PRB), or the frequency domain unit is one sub-band including multiple PRBs.

Optionally, the processor is configured to read the computer program in the memory and perform the following operations:

performing quantization processing on a first element in the encoded data, and transmitting quantized data to the network device, wherein the first element is part or all of elements in the encoded data.

Optionally, the first element includes one of the followings:

$K_1$ non-zero element in the encoded data, wherein $K_1$ is a positive integer, $K_1 \leq K_0$, $K_0$ is a quantity of all elements in the encoded data;

$K_1$ elements in the encoded data that are determined based on a mask vector;

consecutive $K_1$ elements starting from a first position in the encoded data.

Optionally, the first channel information includes L pieces of channel information, and L≥1; the processor is configured to read the computer program in the memory and perform one of the following operations:

when L≥1, sending third indication information to the network device, wherein one piece of channel information corresponds to one piece of third indication information, and the third indication information is used for indicating a quantity of the first element and/or a position of the first element in the encoded data;

when L> 1, in case that the quantity of the first element and/or the position of the first element in the encoded data resulting from encoding a first partial channel information is the same, sending common fourth indication information for the first partial channel information to the network device, wherein the fourth indication information is used for indicating the quantity of the first element and/or the position of the first element in the encoded data; the first partial channel information is part or all of the L pieces of channel information;

when L> 1, sending fifth indication information indicating for the L pieces of channel information jointly to the network device, wherein the fifth indication information is used for indicating the quantity of the first element and/or the position of the first element in the encoded data resulting from encoding each piece of channel information; or, the fifth indication information is used for indicating a total quantity of the first elements in L encoded data resulting from encoding the L pieces of channel information and/or positions of the first elements in the encoded data.

Optionally, in case that the first element includes the $K_1$ non-zero element in the encoded data,

in case that $K_1 < K_0$, the third indication information or the fourth indication information is used for indicating the quantity $K_1$ of the non-zero element and a position of the $K_1$ non-zero element in the encoded data;

in case that $K_1 = K_0$, the third indication information or the fourth indication information is used for indicating the quantity $K_1$ of the non-zero element.

Optionally, the third indication information or the fourth indication information includes N3 bits, and the N3 bits are used for indicating the quantity $K_1$ of the first element, wherein $N3 = \lceil \log_2(K_0) \rceil$.

Optionally, in case that the first element includes the $K_1$ elements in the encoded data that are determined based on a mask vector, or consecutive $K_1$ elements starting from the first position in the encoded data,

the third indication information or the fourth indication information includes N4 bits, the N4 bits are used for indicating a quantity $K_2$ of non-zero element in the $K_1$ elements, and the third indication information or the fourth indication information is also used for indicating a position of the $K_2$ non-zero element in the encoded data,

wherein $N4 = \lceil \log_2(K_1) \rceil$, $K_2 \leq K_1$.

Optionally, the fifth indication information includes N5 bits, and the N5 bits are used for indicating the quantity of the first element in the encoded data resulting from encoding each piece of channel information;

wherein $N5 = \lceil \log_2(\overline{K}) \rceil$, $\overline{K}$ is a maximum quantity of reported elements in each encoded data; or,

the fifth indication information includes N6 bits, and the N6 bits are used for indicating a total quantity of the first elements in the L encoded data; wherein $N6 = \lceil \log_2(\overline{K}_{tot}) \rceil$, $\overline{K}_{tot}$ is a maximum total quantity of reported elements in the L encoded data.

Optionally, the processor is configured to read the computer program in the memory and perform the following operations:

obtaining restored second channel information through the first network model based on data resulting from the processing of the encoded data; calculating a Channel Quality Indicator (CQI) based on the second channel information; and sending the CQI to the network device.

Optionally, the processor is configured to read the computer program in the memory and perform the following operations:

receiving a beamformed channel information reference signal sent by the network device, wherein a beam used by the channel information reference signal is determined based on channel information restored by the network device; determining valid channel information based on the channel information reference signal; calculating a CQI based on the valid channel information;

sending the CQI to the network device.

Optionally, the processor is configured to read the computer program in the memory and perform the following operation:

sending interference-and-noise-related information of a downlink channel to the network device, wherein the interference-and-noise-related information of the downlink channel is used by the network device to calculate a CQI.

An embodiment of the present disclosure provides a terminal, including:

a first receiving unit, configured to receive a downlink signal sent by a network device; a first processing unit, configured to determine a first network model according to the downlink signal, wherein the first network model is at least one of I network models that are pre-deployed or downloaded from the network device side, and I is a positive integer.; an encoding unit, configured to encode first channel information through the first network model, to obtain to-be-transmitted encoded data; and a first sending unit, configured to process the encoded data and then send data resulting from the processing of the encoded data to the network device.

An embodiment of the present disclosure provides an information processing apparatus, including a memory, a transceiver, and a processor;

wherein the memory is configured to store a computer program; the transceiver is configured to send and receive data under the control of the processor; the processor is configured to read the computer program in the memory and perform the following operations:
sending a downlink signal to a terminal, wherein the downlink signal is used by the terminal to determine a first network model, and the first network model is at least one of I pre-deployed network models, where I is a positive integer;
receiving data resulting from the terminal's processing of encoded data, wherein the encoded data is obtained by the terminal after encoding first channel information according to the first network model;
determining to-be-decoded data based on the data resulting from the terminal's processing of the encoded data;
decoding the to-be-decoded data according to the first network model to obtain restored channel information.

Optionally, the downlink signal is a downlink reference signal; the processor is configured to read the computer program in the memory and perform the following operations:

receiving the first uplink signal sent by the terminal; determining the first network model based on the first uplink signal.

Optionally, the downlink signal carries second indication information used for indicating the first network model; the processor is configured to read the computer program in the memory and perform the following operations:

receiving a second uplink signal sent by the terminal; determining third channel information based on the second uplink signal; determining the first network model based on the third channel information.

Optionally, the second uplink signal is an uplink reference signal; or, the second uplink signal carries a Precoding Matrix Indicator (PMI).

Optionally, the processor is configured to read the computer program in the memory and perform the following operations:

performing encoding and/or decoding based on the third channel information through the I network models respectively to obtain fourth channel information corresponding to each network model; calculating a target parameter corresponding to each network model based on the third channel information and the fourth channel information corresponding to each network model; in case that the I network models include $M \geq 1$ network model whose target parameter meets a preset condition, selecting from the M network models a network model through which the encoding yields the encoded data having a smallest quantity of elements, and determining the selected network model as the first network model;

in case that the I network models include M=0 network model whose target parameter meets the preset condition, selecting from the I network models a network model through which the encoding yields the encoded data having a largest quantity of elements, and determining the selected network model as the first network model.

Optionally, the processor is configured to read the computer program in the memory and perform the following operation:

calculating, through a target criterion, the target parameter corresponding to each network model based on the third channel information and the fourth channel information corresponding to each network model;
wherein the target criterion is a cosine similarity criterion, or the target criterion is a normalized mean square error criterion, or the target criterion is a broadband signal to interference and noise ratio criterion.

Optionally, the first channel information includes L pieces of channel information, where L is a positive integer, wherein

in case that different pieces of channel information are encoded and/or decoded through different network models, the second indication information includes N1 bits, and the N1 bits are used for indicating the network models corresponding to the different pieces of channel information respectively, wherein

$$N1 = \left\lceil \log_2(C_I^L) \right\rceil;$$

in case that different pieces of channel information are encoded and/or decoded through a same network model, the second indication information includes N2 bits, and the N2 bits are used for indicating the same network model, wherein N2 = $\left\lceil \log_2(I) \right\rceil$.

Optionally, the first channel information includes L pieces of channel information, and L≥1; the processor is configured to read the computer program in the memory and perform one of the following operations:

when L≥1, receiving third indication information sent by the terminal, wherein one piece of channel information corresponds to one piece of third indication information, and the third indication information is used for indicating a quantity of first element and/or a position of the first element in the encoded data, wherein the first element is part or all of elements in the encoded data;
when L> 1, receiving common fourth indication information sent by the terminal for first partial channel information; wherein the first partial channel information is part or all of the L pieces of channel information, and the quantity of the first element and/or the position of the first element in the encoded data resulting from encoding the first partial channel information is the same, the fourth indication information is used for indicating the quantity of the first element and/or the position of the first element in the encoded data;
when L> 1, receiving fifth indication information sent by the terminal that indicates for the L pieces of channel information jointly, wherein the fifth indication information is used for indicating the quantity of the first element and/or the position of the first element in the encoded data resulting from encoding each piece of channel information; or, the fifth indication information is used for indicating a total quantity of the first elements in L encoded data resulting from encoding the L pieces of channel information and/or positions of the first elements in the encoded data.

Optionally, the first element includes one of the followings:

$K_1$ non-zero element in the encoded data, wherein $K_1$ is a positive integer, $K_1 \leq K_0$, $K_0$ is a quantity of all elements in the encoded data;
$K_1$ elements in the encoded data that are determined based on a mask vector;
consecutive $K_1$ elements starting from a first position in the encoded data.

Optionally, the processor is configured to read the computer program in the memory and perform the following operations:

performing dequantization processing on the data resulting from the terminal's processing of the encoded data to obtain de-quantized data;
determining the to-be-decoded data based on the de-quantized data through the third indication information, or the fourth indication information, or the fifth indication information.

Optionally, the processor is configured to read the computer program in the memory and perform one of the following operations:

determining the to-be-decoded data based on the de-quantized data through a mask vector;
determining the to-be-decoded data based on the de-quantized data through the quantity of the first element;
determining the to-be-decoded data based on the de-quantized data through the position of the first element in the encoded data;
determining the to-be-decoded data based on the de-quantized data through a quantity of non-zero element and a position of the non-zero element in the encoded data;

determining the to-be-decoded data based on the de-quantized data through the quantity of the first element, a quantity of non-zero element among the first element and the position of the non-zero element in the encoded data.

Optionally, the processor is configured to read the computer program in the memory and perform the following operation:

receiving Channel Quality Indicator (CQI) sent by the terminal.

Optionally, the processor is configured to read the computer program in the memory and perform the following operations:

sending a beamformed channel information reference signal to the terminal, wherein a beam used by the channel information reference signal is determined based on the channel information restored by the network device;

receiving the CQI sent by the terminal, wherein the CQI is calculated by the terminal according to the channel information reference signal.

Optionally, the processor is configured to read the computer program in the memory and perform the following operations:

receiving interference-and-noise-related information of a downlink channel sent by the terminal;

calculating CQI based on the interference-and-noise-related information of the downlink channel and the restored channel information.

An embodiment of the present disclosure provides a network device, including:

a first sending unit, configured to send a downlink signal to a terminal; wherein the downlink signal is used by the terminal to determine a first network model, and the first network model is at least one of I pre-deployed network models, I is a positive integer;

a first receiving unit, configured to receive data resulting from the terminal's processing of encoded data; wherein the encoded data is obtained by the terminal after encoding first channel information according to the first network model;

a first processing unit, configured to determine to-be-decoded data based on the data resulting from the terminal's processing of the encoded data;

a decoding unit, configured to decode the to-be-decoded data according to the first network model to obtain restored channel information.

An embodiment of the present disclosure provides a processor-readable storage medium. The processor-readable storage medium stores a computer program. The computer program is used to cause a processor to perform the steps of the foregoing information processing method on the terminal side or the network device side.

Beneficial effects of the technical solutions of the present disclosure are as follows:

in this solution, the terminal receives the downlink signal sent by the network device, and determines, according to the downlink signal, from I pre-deployed network model the first network model used for encoding the channel information corresponding to the downlink reference information, and encoding the first channel information through the first network model to obtain to-be-transmitted encoded data, and sending the data resulting from the processing of the encoded data to the network device, thereby ensuring that the terminal side and/or the network device side can determine the network model used for channel information transmission from multiple pre-deployed network models when the multiple network models are deployed on the terminal side and/or the network device side, and reducing the feedback overhead of channel information transmission and improving the system performance.

## BRIEF DESCRIPTION OF THE DRAWINGS

Fig. 1 shows a structural diagram of AE;

Fig. 2 shows a flow chart of the network training of artificial intelligence-based CSI compressed feedback;

Fig. 3 shows a flow chart of an information processing method on the terminal side according to an embodiment of the present disclosure;

Fig. 4 shows a block diagram of the channel information compressed feedback model of the i-th network model according to an embodiment of the present disclosure;

Fig. 5a shows a block diagram of a training process of an adaptive encoder model according to an embodiment of the present disclosure;

Fig. 5b shows a block diagram of a training process of an adaptive decoder model according to an embodiment of the present disclosure;

Fig. 6 shows a block diagram of a CSI compressed feedback model of a feedback-information-length adaptive variable network according to an embodiment of the present disclosure;

Fig. 7 shows a block diagram of a terminal according to an embodiment of the present disclosure;

Fig. 8 shows a block diagram of an information processing apparatus on the terminal side according to an embodiment of the present disclosure;

Fig. 9 shows a flow chart of an information processing method on the network device side according to an embodiment of the present disclosure;

Fig. 10 shows a block diagram of a network device according to an embodiment of the present disclosure;

Fig. 11 shows a block diagram of an information processing apparatus on the network device side according to an embodiment of the present disclosure;

Fig. 12 shows a block diagram of a CSI compressed feedback processing with multiple network models according to an embodiment of the present disclosure;

Fig. 13 shows another block diagram of a CSI compressed feedback processing with multiple network models according to an embodiment of the present disclosure;

Fig. 14 shows a schematic diagram of position indication of non-zero elements after codeword truncation according to an embodiment of the present disclosure.

## DETAILED DESCRIPTION

In order to make the technical problems, technical solutions and advantages to be solved by the present disclosure clearer, a detailed description will be given below with reference to the accompanying drawings and specific embodiments. In the following description, specific details, such as specific configurations and components, are provided solely to assist in a comprehensive understanding of embodiments of the present disclosure. Accordingly, it will be apparent to those skilled in the art that various changes and modifications can be made to the embodiments described herein without departing from the scope and spirit of the disclosure. Additionally, descriptions of known functions and construction are omitted for clarity and conciseness.

It will be understood that reference throughout this specification to "one embodiment" or "an embodiment" means that a particular feature, structure, or characteristic associated with the embodiment is included in at least one embodiment of the present disclosure. Thus, the appearances of "in one embodiment" or "in an embodiment" in various places throughout this specification are not necessarily referring to the same embodiment. Furthermore, the particular features, structures or characteristics may be combined in any suitable manner in one or more embodiments.

In various embodiments of the present disclosure, it should be understood that the sequence numbers of the following processes does not mean the order of execution. The execution order of each process should be determined by its functions and internal logic, and the sequence numbers should not constitute any limitations on the implementations of the embodiments of the present disclosure.

Additionally, the terms "system" and "network" are often used interchangeably herein.

The technical solutions provided by the embodiments of the present disclosure can be applied to a variety of systems, especially 5G systems. For example, applicable systems may be Global System of Mobile communication (GSM) system, Code Division Multiple Access (CDMA) system, Wideband Code Division Multiple Access (WCDMA), General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide interoperability for Microwave access (WiMAX) system, fifth Generation mobile communication (5th-Generation, 5G) New Radio (NR) system, etc. These various systems each include a terminal device and a network device. The system can also include a core network part, such as the evolved packet system (EPS), and 5G System (5GS), etc.

The network device and the terminal device may each perform Multi-Input Multi-Output (MIMO) transmission with each other by using one or more antennas. The MIMO transmission may be Single User MIMO (SU-MIMO) or Multiple User MIMO (MU-MIMO). According to the configuration and quantity of antenna combinations, the MIMO transmission may be two Dimensional-MIMO (2D-MIMO), three Dimensional-MIMO (3D-MIMO), Full Dimensional-MIMO (FD-MIMO) or massive-MIMO, and may be diversity transmission, precoded transmission, beam forming transmission, or the like.

In the embodiments of this disclosure, the term "and/or" describes the association relationship between associated objects, indicating that there can be three relationships, for example, A and/or B can mean: A exists alone, A and B exist simultaneously, and B exists alone. The symbol "/" generally indicates that the associated objects are in an "or" relationship.

In the embodiments of this disclosure, the term "plurality" refers to two or more than two, and other quantifiers are similar to it.

The technical solutions in the embodiments of the present disclosure will be clearly and thoroughly described below with reference to the accompanying drawings in the embodiments of the present disclosure. Obviously, the described embodiments are only some of the embodiments of the present disclosure, not all of them. Based on the embodiments in this disclosure, all other embodiments obtained by those of ordinary skill in the art without making creative efforts fall within the scope of this disclosure.

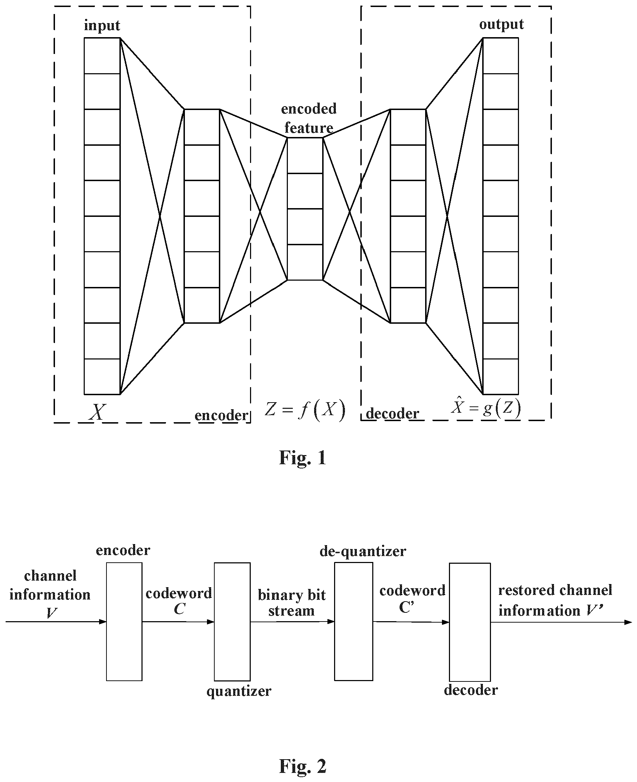

The Auto-Encoder (AE) involved in the embodiments of the present disclosure is a neural network with the same input and output. The AE is composed of an encoder and a decoder. The encoder compresses the input data into a latent space representation, the decoder reconstructs the input based on this representation. The structure of AE is as shown in Fig. 1. The input data X is firstly compressed by the encoder into $Z = f(X)$, and then the encoded feature Z is processed by the decoder to obtain $\hat{X} = g(Z) = g(f(X))$ so as to reconstruct the input data X. Through a back propagation training mode, the AE solves the mapping relationship between f(·) and g(·), and minimizes the reconstruction error L(X, X). The encoder module and decoder module can be constructed using convolutional neural networks, fully connected neural networks, recurrent neural networks, etc. and combinations thereof.

When AE is applied to CSI compressed feedback, the dimension of the output Z of the encoder is smaller than its input X. The smaller the dimension of the output Z, the higher the compression rate, and correspondingly the greater the error of the decoder in restoring CSI.

A network training process of artificial intelligence-based CSI compressed feedback is shown in Fig. 2. The terminal side inputs the obtained channel information V to an encoder to obtain the compressed codeword C (the information length of the codeword C is much smaller than the length of the input V), then inputs the codeword C into a quantizer, inputs the quantized binary bit stream to a de-quantizer to obtain the codeword C' with quantization error, and finally inputs C' to a decoder module to obtain the restored channel information V'.

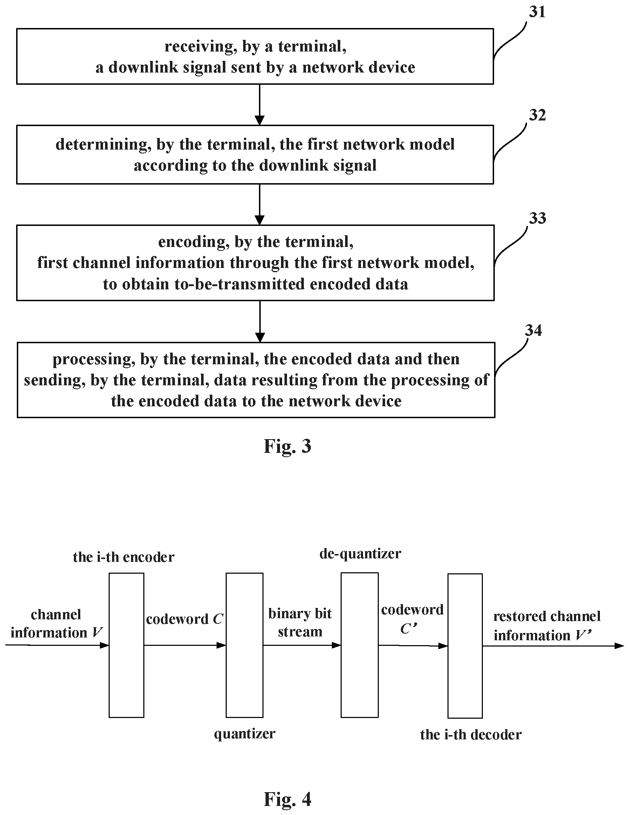

As shown in Fig. 3, an embodiment of the present disclosure provides an information processing method, which includes the following steps 31 to 34.

Step 31: receiving, by a terminal, a downlink signal sent by a network device.

Optionally, the downlink signal may be a downlink reference signal, and the downlink reference signal may be used by the terminal to determine a first network model for encoding the channel information corresponding to the downlink reference information from I network models that are pre-deployed or downloaded from the network device side; or, the downlink signal may carry first indication information used for indicating the first network model.

Step 32: determining, by the terminal, the first network model according to the downlink signal.

The first network model is at least one of the I network models that are pre-deployed or downloaded from the network device side, and I is a positive integer.

Optionally, the first network model can be selected and determined by the terminal side from I network models. If the downlink signal is a downlink reference signal sent by a network device, the terminal can select at least one network model from I network models as the first network model based on the downlink reference signal. Alternatively, the first network model may be configured by the network device to the terminal, for example, the downlink signal carries first indication information used for indicating the first network model among the I network models.

Step 33: encoding, by the terminal, first channel information through the first network model, to obtain to-be-transmitted encoded data.

Optionally, the first channel information may include L pieces of channel information which may be CSI, and L is a positive integer, wherein when L is greater than 1, different pieces of channel information may be encoded (or compressed) using the same network model, or different pieces of channel information can also be encoded using different network models. For example, after the first channel information is encoded through network models, codeword (i.e., to-be-transmitted encoded data) corresponding to each channel information can be obtained, to reduce the feedback overhead of the terminal.

Step 34: processing, by the terminal, the encoded data and then sending, by the terminal, data resulting from the processing of the encoded data to the network device.

Optionally, the terminal may quantize and send some or all elements in the encoded data to the network device.

In the above solution, the terminal receives the downlink signal sent by the network device, determines the first network model for encoding the channel information corresponding to the downlink reference information from I pre-deployed network models according to the downlink signal, and encodes the first channel information through the first network model to obtain to-be-transmitted encoded data, and sends the processed encoded data to the network device, thereby ensuring that the terminal side and/or the network device side can determine the network model used for channel information transmission from multiple pre-deployed network models when the multiple network models are deployed on the terminal side and/or the network device side, and reducing the feedback overhead of channel information transmission and improving the system performance.

Optionally, the network model includes an encoder and/or a decoder. For example, the network model may be a network model including an encoder and a decoder, or the network model may be a network model including an encoder, or the network model may be a network model including a decoder. For example: in the case where multiple encoders corresponding to one decoder are used to transmit channel information between a terminal and a network device, at least one encoder can be selected from multiple encoders based on the above solution of the present disclosure to encode channel information. For another example, in the case where one encoder corresponding to multiple decoders is used for channel information transmission between the terminal and the network device, at least one decoder can be selected from the multiple decoders based on the above solution of the present disclosure.

The following is an example in which I network models are pre-trained, each network model including one encoder and one decoder. For example, the codeword output by the encoder of the i-th network model is $C_i$ and has a length of $k_i$. The $k_i$ corresponding to different network models can be equal or different. The block diagram of the channel information compressed feedback model of the i-th network model is shown in Fig. 4.

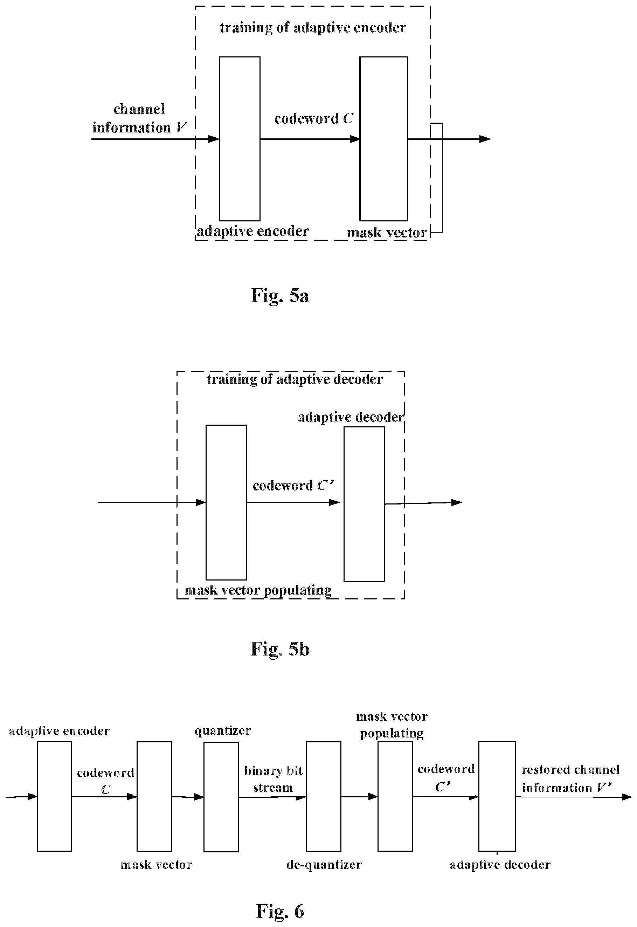

In order to enable the adaptive variation of feedback information length, a network model including an adaptive encoder and an adaptive decoder may be used. For example, if I network models are pre-trained, all of these I network models may be a network model including an adaptive encoder and an adaptive decoder, or some of the I network models may be a network model including an adaptive encoder and an adaptive decoder. The adaptive encoder and the adaptive decoder are formed by adding a random mask vector module after the encoder module, and adding a corresponding mask vector populating module before the decoder, which can be obtained through network training, as shown in Figs. 5a and 5b. For example, the channel information V is processed by the encoder to obtain a codeword C having a vector length of $k_{max}$. The codeword C is processed by a mask vector module of length $k_{max}$ to obtain:

$$Z_{\mathrm{masking}} = C \odot M,$$

wherein, the vector $M$ is a mask vector, $M$ is a vector with the first $k$ bits being 1 and the last ($k_{max} - k$) bits being 0, that is, $M = [1,1, ...,1,0,0, ...,0]$. During network training, $k \in [0, k_{max}]$ is a random value which can obey a random distribution with equal probability, and the operator $\odot$ represents bitwise multiplication. It is equivalent to truncating the original encoded output of an information length $k_{max}$ into a length of $k$ and feeding it back as valid information; the adaptive decoder adds 0 to the received information by introducing a mask vector populating module, to restore the information length to $k_{max}$ as the input to the decoder.

As shown in Fig. 6, a block diagram of a CSI compressed feedback model based on a feedback-information-length adaptive variable network is given. The channel information V is firstly input to the adaptive encoder and the output codeword C is truncated by the mask vector module and then input to the quantizer module for quantization, to achieve compression of the channel information V. The quantized binary bit stream is then input in sequence to the de-quantizer module and the mask vector populating module to obtain the codeword C'. Then the codeword C' is input to the adaptive decoder to obtain the restored channel information V'.

It should be noted that the mask vector, the quantizer, the de-quantizer and the mask vector populating module are introduced in the embodiment of the present disclosure to better assist in explaining the process of CSI compressed feedback. Some of these modules may not exist or may be replaced by other modules with similar functionality. For example, the mask vector module is used to determine all or part of the element information in the terminal feedback codeword, the quantizer is used to quantize each element value in the codeword through N bits to quantize some discrete numerical values, and the de-quantizer is used to represent the determined value based on the N bits as the element value in the codeword. The mask vector populating module is used to determine corresponding elements in the codeword based on the indication information of the quantity of elements and/or the element position reported by the terminal and populate the remaining positions with 0.

Optionally, the downlink signal is a downlink reference signal; the determining, by the terminal, the first network model according to the downlink signal includes:

determining, by the terminal, the first channel information according to the downlink reference signal; determining, by the terminal, the first network model according to the first channel information.

Specifically, the terminal side may estimate downlink channel information (i.e., first channel information) based on the received downlink reference signal, and select one network model or at least two network models from I network models based on the estimated downlink channel information. For example: when there is L=1 channel information to be transmitted, the terminal can select one network model from I network models; when there is L> 1 channel information to be transmitted, and the L pieces of channel information are encoded and/or decoded using the same network model, the terminal can select one network model from I network models; when there is L> 1 channel information to be transmitted, and the L pieces of channel information are encoded and/or decoded using different network models, the terminal can select at least two/L network models, etc. from the I network models, and the embodiments of the present disclosure are not limited thereto.

Optionally, after the determining, by the terminal, the first network model according to the first channel information, the method further includes:
sending, by the terminal, a first uplink signal to the network device; wherein the first uplink signal carries first indication information used for indicating the first network model.

In this embodiment, in case that the terminal side selects a network model (i.e., a first network model) for channel information encoding and/or decoding processing from I network models, after the terminal determines the first network model used for the first channel information encoding and/or decoding, the terminal sends first indication information to the network device, so that the network device learns the first network model for encoding and/or decoding the first channel information according to the first indication information.

Optionally, the first channel information includes L pieces of channel information, where L is a positive integer;

wherein in case that different pieces of channel information are encoded and/or decoded through different network models, the first indication information includes N1 bits, and the N1 bits are used for indicating the network models corresponding to the different pieces of channel information respectively;

wherein $N1 = \lceil \log_2(C_I^L) \rceil$ .

In other words, when the terminal sends, to the network device, the first indication information for indicating the first network model used by the terminal to encode and/or decode the first channel information, the terminal may specifically use the N1 bits to indicate different network models corresponding to different pieces of channel information. N1 can be determined according to the quantity L of channel information and the quantity I of network models. For example: $N1 = \lceil \log_2(C_I^L) \rceil$ , where $C_I^L$ represents selecting L network models from I network models, and L represents the quantity of transmission layers (that is, the quantity of channel information).

In case that different pieces of channel information are encoded and/or decoded through a same network model, the first indication information includes N2 bits, and the N2 bits are used for indicating the same network model, wherein N2 = $\lceil \log_2(I) \rceil$ .

In other words, when the terminal sends, to the network device, the first indication information for indicating the first network model used by the terminal to encode and/or decode the first channel information, the terminal may specifically use N2 bits to indicate the same network model corresponding to different pieces of channel information. N2 can be determined according to the quantity I of network models. For example:

$$N2 = \lceil \log_2(I) \rceil$$

.

Optionally, the terminal can select an appropriate first network model from I network models in a traversal manner; specifically, the determining, by the terminal, the first network model according to the first channel information includes:

performing, by the terminal, encoding and/or decoding based on the first channel information through the I network models respectively, to obtain second channel information corresponding to each network model;
calculating, by the terminal, a target parameter corresponding to each network model based on the first channel information and the second channel information corresponding to each network model;
in case that the I network models include M ≥ 1 network model whose target parameter meets a preset condition, selecting, by the terminal, from the M network models a network model through which the encoding yields the encoded data having a smallest quantity of elements, and determining, by the terminal, the selected network model as the first network model;
in case that the I network models include M=0 network model whose target parameter meets the preset condition, selecting, by the terminal, from the I network models a network model through which the encoding yields the encoded data having a largest quantity of elements, and determining, by the terminal, the selected network model as the first network model.

Specifically, taking the first network model including an encoder and a decoder as an example, the performing, by the terminal, encoding and/or decoding based on the first channel information through the I network models respectively to obtain second channel information corresponding to each network model may include: the terminal uses the first channel information as the input to the encoder in the first network model to obtain compressed encoded data; the terminal may perform a first processing on the encoded data (e.g., truncation through a mask vector and/or quantization processing, etc.) and perform a second processing on the data subjected to the first processing (e.g., the second processing can be understood as an inverse of the first processing, such as dequantization processing and/or masking vector populating, etc.); the terminal uses the data subjected to the second processing as the input to the decoder in the first network model, and performs decoding to obtain the restored channel information (i.e., the second channel information).

It is noted that the performing, by the terminal, encoding and/or decoding based on the first channel information through the I network models respectively to obtain second channel information corresponding to each network model is not limited to obtaining, by the terminal, second channel information corresponding to all network models. That is to say, the terminal may obtain the restored second channel information based on the first channel information for all network models, and then select the first network model based on the target parameters determined by the first channel information and the second channel information; or, the terminal may obtain the restored second channel information based on the first channel information for only some network models. For example, when the terminal performs encoding and/or decoding processing based on the first channel information through the I network models in sequence to obtain the second channel information corresponding to each network model, if the first network model can be selected from i network models through judgment based on the target parameter determined by the i-th network model, then the next (I-i) network models can no longer be used to obtain the restored second channel information based on the first channel information, thereby improving processing efficiency.

Optionally, the calculating, by the terminal, the target parameter corresponding to each network model based on the first channel information and the second channel information corresponding to each network model includes:

calculating, by the terminal through a target criterion, the target parameter corresponding to each network model based on the first channel information and the second channel information corresponding to each network model;

wherein the target criterion is a cosine similarity criterion, or the target criterion is a normalized mean square error criterion, or the target criterion is a broadband signal to interference and noise ratio criterion.

Specifically, taking the broadband signal to interference and noise ratio criterion as an example, an optional embodiment of determining the first network model according to the present disclosure is described below:

step A1: performing, by the terminal, encoding and/or decoding processing based on the first channel information through the i-th network model in the I network models, to obtain the i-th second channel information;

step A2: calculating, by the terminal, the i-th target parameter based on the first channel information and the i-th second channel information;

if the i-th target parameter is greater than a preset threshold, then setting i=i+1 and repeating the step A1;

if the i-th target parameter is less than or equal to the preset threshold, then setting i=i+1 and repeat the step A1 until the i-th target parameter is greater than the preset threshold;

step A3: if $i \leq I$ and there are M network models whose target parameters are less than or equal to the preset threshold, then determining, by the terminal, a network model among the M network models that outputs encoded data having a smallest quantity of elements (that is, the smallest length of the encoded data) as the first network model, wherein M is a positive integer;

if i=I and the target parameters corresponding to the I network models are all greater than the preset threshold, then determining, by the terminal, a network model among the I network models that outputs encoded data having the largest quantity of elements as the first network model.

For example, if the corresponding broadband signal to interference and noise ratio $\gamma_{WB,i} < \gamma_T$ calculated according to the i-th network model demonstrates that the selected i-th network model cannot meet the requirement, the broadband signal to interference and noise ratio $\gamma_{WB,i+1}$ corresponding to the (i+1)-th network model is calculated successively, until the calculated $\gamma_{WB,i} \geq \gamma_T$. Finally, the network model which meets the requirement $\gamma_{WB,i} \gtrsim \gamma_T$ and whose encoder outputs the shortest codeword length (i.e., the quantity of elements in the encoded data is the smallest) is determined as the first network model. Wherein, $\gamma_T$ represents the preset threshold value.

If it is calculated based on the i-th network model that $\gamma_{WB,i} \geq \gamma_T$, although the currently selected network model can meet the requirement, the length of the codeword output by the network model may be too large. The broadband signal to interference and noise ratio $\gamma_{WB,i+1}$ corresponding to the (i+1)-th network model may be calculated successively, until the calculated $\gamma_{WB,i} < \gamma_T$. Finally, a network model outputting the shortest codeword length among all models meeting $\gamma_{WB,i} > \gamma_T$ is determined as the first network model.

If the calculated broadband signal-to-noise ratios corresponding to all network models cannot meet the requirement, then the network model corresponding to the largest codeword length is determined as the first network model.

Optionally, the terminal can also determine the selected network model based on the uplink transmission resource.

Optionally, the downlink signal carries second indication information used for indicating the first network model; and before the receiving, by the terminal, the downlink signal sent by the network device, the method further includes:

sending, by the terminal, a second uplink signal to the network device; wherein the second uplink signal is used by the network device to determine the first network model;

wherein the second uplink signal is an uplink reference signal; or, the second uplink signal carries a Precoding Matrix Indicator (PMI).

In this embodiment, the first network model can be determined by the network device side, and the network device can configure the determined network model to the terminal through signaling. For example, the network device sends network model indication information (i.e., second indication information) to the terminal to indicate the first network model for encoding and/or decoding the first channel information, so that the terminal can perform compressed feedback of the first channel information according to the first network model determined by the second indication information.

For example: before the terminal receives the network model indication information sent by the network device side (that is, the terminal receives the downlink signal sent by the network device), the terminal sends an uplink signal to the network device side at least once. The uplink signal can be an uplink reference signal, or the uplink signal carries PMI (such as Type I or Type II codebook) calculated by the terminal, so that the network device side can select the first network model.

Optionally, the first channel information includes L pieces of channel information, and L is a positive integer; wherein, the $l$-th channel information among the L pieces of channel information includes one of the followings:

downlink channel information $H_l$ corresponding to an $l$-th receiving antenna in a first frequency domain unit, wherein, $H_l \in \mathbb{C}^{N_c \times N_t}$, $l \in \{1, ..., P1\}$, $N_t$ is a quantity of transmitting antenna ports of the network device, $N_c$ is a quantity of frequency domain units in the first frequency domain unit, $P1$ is a quantity of receiving antennas of the terminal;

a received signal $Y_l$ of a downlink reference signal passing through a channel that is received by the $l$-th receiving antenna in the first frequency domain unit, wherein $Y_l \in \mathbb{C}^{N_c \times N_t}$, $l \in \{1, ..., P1\}$, $P1$ is a quantity of receiving antennas of the terminal;

an $l$-th eigenvector $U_l$ obtained by a singular value decomposition of downlink channel information in the first frequency domain unit, wherein $U_l \in \mathbb{C}^{N_c \times N_t}$, $l \in \{1, ..., P2\}$, $P2$ is a quantity of eigenvectors;

a precoding vector $V_l$ of an $l$-th data stream in the first frequency domain unit, wherein $V_l \in \mathbb{C}^{N_c \times N_t}$, $l \in \{1, ..., P3\}$, $P3$ is a quantity of data streams;

a combination of precoding vectors of R data streams in the first frequency domain unit, wherein L= 1; for example, the combined matrix is $[V_1; V_2; ... ; V_R]$;

a combination of received signals of a downlink reference signal passing through channels that correspond to R receiving antennas respectively in the first frequency domain unit, wherein L=1; for example, the combined matrix is $[Y_1; Y_2; ... ; Y_R]$;

a combination of pieces of downlink channel information corresponding to the R receiving antennas respectively in the first frequency domain unit, wherein L=1; for example, the combined matrix is $[H_1; H_2; ... ; H_R]$;

a combination of R eigenvectors obtained by a singular value decomposition of the downlink channel information in the first frequency domain unit, wherein L= 1; for example, the combined matrix is $[U_1; U_2; ... ; U_R]$;

a combination of precoding vectors of R data streams in the first frequency domain unit and (vl-R) zero vectors $0_j$, wherein L=1, $0_j \in \mathbb{C}^{N_c \times N_t}$, $j \in \{R + 1, ..., v1\}$, v1 is a maximum quantity of data streams that the terminal is capable of transmitting; for example, the combined matrix is $[V_1; V_2; ... ; V_R;$ $0_{R+1}; ... ; 0_v]$;

a combination of the pieces of downlink channel information corresponding to the R receiving antennas respectively in the first frequency domain unit and (v2-R) zero vectors, wherein L=1, v2 is a maximum quantity of receiving antennas of the terminal; for example, the combined matrix is $[H_1; H_2; ...; H_R;$ $0_{R+1}; ... ; 0_v]$;

a combination of the received signals of the downlink reference signal passing through the channels that correspond to the R receiving antennas respectively in the first frequency domain unit and the (v2-R) zero vectors, wherein L=1; for example, the combined matrix is $[Y_1; Y_2; ... ; Y_R; 0_{R+1}; ... ; 0_v]$;

a combination of the R eigenvectors obtained by the singular value decomposition of the downlink channel information in the first frequency domain unit and the (vl-R) zero vectors, wherein L=1; for example, the combined matrix is $[U_1; U_2; ... ; U_R; 0_{R+1}; ... ; 0_v]$;

channel information $\breve{H}_l$ obtained by a two-dimensional Fourier transformation of the channel information in the first frequency domain unit, wherein $\breve{H}_l \in \mathbb{C}^{N_c \times N_t}$, $l \in \{1, ..., P2\}$;

partial channel information $\hat{H}_l$ retained after truncating channel information in the frequency domain of the $\breve{H}_l$, wherein, $\hat{H}_l \in \mathbb{C}^{N_c' \times N_t}$, $N_c' < N_c$;

wherein the first frequency domain unit is all frequency domain units or one frequency domain unit, $\mathbb{C}^{N_c \times N_t}$ indicates that the matrix dimension is $N_c \times N_t$, where the elements are complex numbers.

Optionally, the frequency domain unit is one subcarrier, or the frequency domain unit is one Physical Resource Block (PRB), or the frequency domain unit is one sub-band including multiple PRBs.

Optionally, the processing, by the terminal, the encoded data and then sending, by the terminal, data resulting from the processing of the encoded data to the network device includes:

performing, by the terminal, quantization processing on a first element in the encoded data, and transmitting, by the terminal, quantized data to the network device; wherein the first element is part or all of the elements in the encoded data.

For example: for the $l$-th channel information of L pieces of channel information, the terminal inputs it to the first network model corresponding to the $l$-th channel information, and obtains one codeword C (i.e., encoded data) output by the encoder in the first network model. The codeword C can be expressed as a vector, and its quantity of elements is $K_0$. The terminal quantizes some or all elements, namely, $K_1 \leq K_0$ elements, in the codeword C and then feeds the quantized elements back to the network device through the uplink channel (such as quantization processing through the quantizer module).

Optionally, the manner of determining by the terminal some or all elements in the encoded data, i.e., the first element, includes one of the followings.

$K_1$ non-zero element in the encoded data, wherein $K_1$ is a positive integer, $K_1 \le K_0$, $K_0$ is a quantity of all elements in the encoded data; for example:

the terminal compresses the *l*-th channel information (such as CSI) through the first network model corresponding to the *l*-th channel information to obtain the codeword $C_i$, $i \in \{1, \dots, l\}$ (i.e., encoded data), where $C_i$ represents the codeword compressed by using the selected i-th network model. The terminal quantizes $K_1 \ge 1$ non-zero element in the codeword $C_i$ and reports the quantized element to the network device side

$K_1$ elements in the encoded data that are determined based on a mask vector; for example, the terminal quantizes the elements in the encoded data that correspond to the non-zero elements of the mask vector and reports the quantized elements to the network device. The mask vector corresponds to the network model, that is, when the network model is determined, its corresponding mask vector can also be determined, that is, the mask vector can also be selected by the terminal itself, or configured by the network to the terminal.

Consecutive $K_1$ elements starting from a first position in the encoded data; for example: the terminal quantizes consecutive $K_1$ elements starting from the first position in the encoded data and reports the quantized elements to the network device. $K_1$ may be selected by the terminal itself, or may be configured by the network to the terminal; the first position may be determined based on a predefinition, or may be reported and indicated by the terminal, or may be configured by the network to the terminal.

Optionally, the first channel information includes L pieces of channel information, and $L \ge 1$; and the method further includes one of the followings:

when $L \ge 1$, sending, by the terminal, third indication information to the network device, wherein one piece of channel information corresponds to one piece of third indication information, and the third indication information is used for indicating a quantity of the first element and/or a position of the first element in the encoded data; that is, determining the first element independently for L pieces of channel information and independently reporting the quantity of the first element and/or the position of the first element in the encoded data;

when L> 1, in case that the quantity of the first element and/or the position of the first element in the encoded data resulting from encoding a first partial channel information is the same, sending, by the terminal, common fourth indication information for the first partial channel information to the network device, wherein the fourth indication information is used for indicating the quantity of the first element and/or the position of the first element in the encoded data; the first partial channel information is part or all of the L pieces of channel information; that is, for the first partial channel information among the L pieces of channel information, because the quantity of first elements in the encoded data resulting from encoding thereof and/or the position of the first element in the encoded data is the same, the quantity of the first element and/or the position of the first element in the encoded data can be reported to the network device through one common indication information; when L>1, sending, by the terminal, fifth indication information indicating for the L pieces of channel information jointly to the network device, wherein the fifth indication information is used for indicating the quantity of the first element and/or the position of the first element in the encoded data resulting from encoding each piece of channel information; or, the fifth indication information is used for indicating a total quantity of the first elements in L encoded data resulting from encoding the L pieces of channel information and/or positions of the first elements in the encoded data.

Optionally, in case that the first element includes the $K_1$ non-zero element in the encoded data,

in case that $K_1 < K_0$, the third indication information or the fourth indication information is used for indicating the quantity $K_1$ of the non-zero element and a position of the $K_1$ non-zero element in the encoded data;

in case that $K_1 = K_0$, the third indication information or the fourth indication information is used for indicating the quantity $K_1$ of the non-zero element.

For example: in case that $K_1 < K_0$, that is, some elements in the encoded data are non-zero elements, the terminal needs to indicate to the network device the quantity $K_1$ of the non-zero element and the position of the $K_1$ non-zero elements in the encoded data, for example, the terminal can indicate the position of the non-zero element in the codeword through one bitmap or combinatorial number, and report it to the network side. In case that $K_1 = K_0$, that is, when all elements in the encoded data are non-zero elements, the terminal can indicate the quantity $K_1$ of the non-zero element to the network device. In this case, there is no need to indicate the position of the non-zero element in the encoded data.

Optionally, the third indication information or the fourth indication information includes N3 bits, and the N3 bits are used for indicating the quantity $K_1$ of the first element, wherein $N3= \lceil \log_2(K_0) \rceil$.

In other words, for any one of the above manners of determining some or all elements in the encoded data, the terminal may indicate the quantity $K_1$ of the first element through the N3 bits. N3 can be determined based on the quantity $K_0$ of all elements in the encoded data, e.g., $N3 = \lceil \log_2(K_0) \rceil$. At the same time, the terminal also indicates the positions of $K_1$ first elements in the encoded data through a bitmap or a combinatorial number.

Optionally, in case that the first element includes the $K_1$ elements in the encoded data that are determined based on a mask vector, or consecutive $K_1$ elements starting from the first position in the encoded data: the third indication information or the fourth indication information includes N4 bits, the N4 bits are used for indicating a quantity $K_2$ of non-zero element in the $K_1$ elements, and the third indication information or the fourth indication information is also used for indicating a position of the $K_2$ non-zero element in the encoded data, wherein $N4 = \lceil \log_2(K_1) \rceil$, $K_2 \leq K_1$.

In other words, for any one of the above manners of determining some or all elements in the encoded data, the terminal may indicate the quantity $K_2$ of non-zero elements in the $K_1$ first elements through N4 bits. N4 can be determined according to the quantity $K_1$ of the first element, such as $N4 = \lceil \log_2(K_1) \rceil$. At the same time, the terminal also indicates the position of the $K_2$ non-zero elements to the network device through a bitmap or combinatorial number. At this time, the terminal quantizes the $K_2$ non-zero elements and reports the quantized elements to the network device, and other elements are not reported.

Optionally, the fifth indication information includes N5 bits, and the N5 bits are used for indicating the quantity of the first element in the encoded data resulting from encoding each piece of channel information; wherein $N5 = \lceil \log_2(\overline{K}) \rceil$, $\overline{K}$ is a maximum quantity of reported elements in each encoded data; or, the fifth indication information includes N6 bits, and the N6 bits are used for indicating a total quantity of the first elements in the L encoded data; wherein $N6 = \lceil \log_2(\overline{K}_{tot}) \rceil$, $\overline{K}_{tot}$ is a maximum total quantity of reported elements in the L encoded data.

For example, the terminal may determine the quantity of the to-be-reported first elements and/or the positions of the first elements in the L encoded data jointly. The quantities of reported first elements in different encoded data may be different and/or the positions of the first elements in different encoded data may be different. Optionally, the quantity of reported first element in each encoded data and/or the position of the first element in the encoded data can be indicated to the network device in the abovementioned independent reporting manner; or jointly reported to the network device, for example, the terminal can use N5 bits to indicate the quantity of the first element in the encoded data resulting from encoding each piece of channel information. N5 can be determined based on a maximum quantity $\overline{K}$ of reported elements in each encoded data, e.g., $N5 = \lceil \log_2(\overline{K}) \rceil$. $\overline{K}$ can be configured by the network to the terminal or can be predefined. For example, the terminal can also indicate a total quantity of the first elements in the L encoded data through N6 bits, and N6 can be determined based on a maximum total quantity $\overline{K}_{tot}$ of reported elements in the L encoded data, e.g., $N6 = \lceil \log_2(\overline{K}_{tot}) \rceil$. $\overline{K}_{tot}$ can be configured by the network to the terminal or can be predefined. At this time, the terminal can also indicate the positions of the reported first elements in different encoded data through the bitmaps or combinatorial numbers corresponding to respective encoded data.

Optionally, the above quantization process may be quantizing the value of the first element into a discrete value within a certain value range, and representing the quantized discrete value of each element with N bits, to output a binary bit stream. Correspondingly, the network device needs to perform dequantization processing, which means determining the value of the first element in the encoded data based on the received binary bit stream, wherein the value of each element is determined by the value represented by N bits.

Optionally, after the determining, by the terminal, the first network model according to the downlink signal, the method further includes:

obtaining, by the terminal, restored second channel information through the first network model based on data resulting from the processing of the encoded data;

calculating, by the terminal, a Channel Quality Indicator (CQI) based on the second channel information;

sending, by the terminal, the CQI to the network device.

For example: the terminal can perform quantization processing on the first element in the encoded data through the quantizer module to obtain the quantized data, and then input the quantized data to the corresponding de-quantizer module for dequantization processing, and input the de-quantized data to the decoder in the first network model for decoding to obtain the restored second channel information, and then calculate the CQI based on the restored second channel information.

Alternatively, the terminal may process the encoded data through the mask vector module to determine the first element, and quantize the first element through the quantizer module to obtain quantized data, and then input the quantized data into the corresponding de-quantizer module to perform dequantization processing, and input the quantized data to the mask vector populating module for processing, and input the processed data to the decoder in the first network model for decoding to obtain the restored second channel information, and then calculate the CQI based on the restored second channel information.

Optionally, after the determining, by the terminal, the first network model according to the downlink signal, the method further includes:

receiving, by the terminal, a beamformed channel information reference signal sent by the network device; wherein a beam used by the channel information reference signal is determined based on the channel information restored by the network device; determining, by the terminal, valid channel information based on the channel information reference signal; calculating, by the terminal, a CQI based on the valid channel information; sending, by the terminal, the CQI to the network device.

For example: the channel information reference signal can be a CSI Reference Signal (CSI-RS). The terminal estimates the downlink valid channel information based on the received beamformed CSI-RS, and then calculates the CQI based on the estimated valid channel information, where the beam used by the CSI-RS is determined by the channel information restored by the first network model on the network device side.

Optionally, the method also includes:
sending, by the terminal, interference-and-noise-related information of a downlink channel to the network device; wherein the interference-and-noise-related information of the downlink channel is used by the network device to calculate the CQI.

In this embodiment, the terminal reports the interference-and-noise-related information of the downlink channel to the network device, so that the network device side calculates the CQI based on the interference-and-noise-related information of the downlink channel.

It should be noted that the "codeword" involved in the embodiments of the present disclosure is encoded data obtained after encoding the channel information, and the channel information may be SCI.

Optionally, the manner of determining the channel information, the manner of determining the first element, the manner of reporting the quantity and/or position of the first element, the CQI calculation method, etc. in the above embodiments of the present disclosure can also be applied to a scenario where the network model used for encoding and/or decoding processing between the terminal side and the network side has been determined (for example, the terminal and/or network device side may not perform the step of determining the first network model), which will not be described again here to avoid redundancy.

The terminal involved in the embodiments of the present disclosure may be a device that provides voice and/or data connectivity to users, a handheld device with a wireless connection function, or other processing devices connected to a wireless modem, etc. In different systems, the names of terminal device may also be different. For example, in a 5G system, the terminal device may be called User Equipment (UE). A wireless terminal device can communicate with one or more Core Networks (CNs) via a Radio Access Network (RAN). The wireless terminal device can be a mobile terminal device, such as a mobile phone (also known as a "cell phone") and a computer with a mobile terminal device, which may be, for example, portable, pocket-sized, handheld, computer-built-in or vehicle-mounted mobile devices, which exchange audio and/or data with a radio access network. For example, Personal Communication Service (PCS) phones, cordless phones, Session Initiated Protocol (SIP) phones, Wireless Local Loop (WLL) stations, Personal Digital Assistants (PDAs) and other devices. A wireless terminal device may also be called a system, a subscriber unit, a subscriber station, a mobile station, a mobile, a remote station, an access point, a remote terminal, access terminal, a user terminal, a user agent, or a user device, which is not limited in the embodiments of the present disclosure.

The network device involved in the embodiments of the present disclosure may be a base station, and the base station may include multiple cells that provide services to terminals. Depending on the specific application, a base station can also be called an access point, or it can be a device in the access network that communicates with wireless terminal devices through one or more sectors on the air interface, or it can be named by another name. A network device can be used to exchange received air frames with Internet Protocol (IP) packets and act as a router between the wireless terminal device and the rest of the access network, wherein the rest of the access network can include the IP communications network. Network devices may also coordinate attribute management of the air interface. For example, the network device involved in the embodiments of the present disclosure may be a network device (Base Transceiver Station, BTS) in Global System for Mobile communications (GSM) or Code Division Multiple Access (CDMA), or it can be a network device (NodeB) in a Wide-band Code Division Multiple Access (WCDMA), or an evolved Node B (eNB or e-NodeB) in a Long Term Evolution (LTE) system, a 5G base station (gNB) in a 5G network architecture (next generation system), or a Home evolved base station (Home evolved Node B, HeNB), a relay node, a femto, a pico, etc., which are not limited in the embodiments of the present disclosure. In some network structures, network devices may include Centralized Unit (CU) nodes and Distributed Unit (DU) nodes, and the centralized units and distributed units may also be arranged geographically separately.

The above embodiment introduces the information processing method on the terminal side of the present disclosure. The following embodiments will further describe the corresponding apparatus and terminal in conjunction with the accompanying drawings.

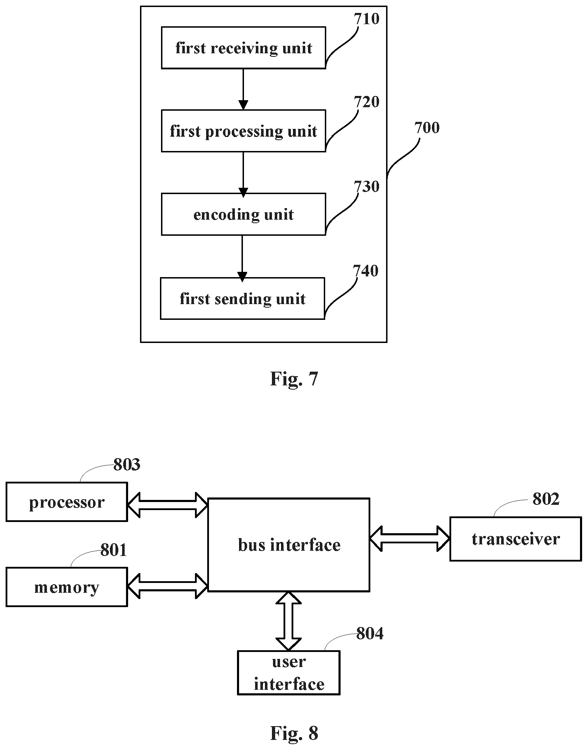

Specifically, as shown in Fig. 7, an embodiment of the present disclosure provides a terminal 700, including:

a first receiving unit 710, configured to receive downlink signals sent by a network device;
a first processing unit 720, configured to determine a first network model according to the downlink signal; wherein the first network model is at least one of I network models that are pre-deployed or downloaded from the network device side, and I is a positive integer;
an encoding unit 730, configured to encode first channel information through the first network model to obtain to-be-transmitted encoded data; and
a first sending unit 740, configured to send data resulting from the processing of the encoded data to the network device.

Optionally, the downlink signal is a downlink reference signal; the first processing unit 720 is further configured to:

determine the first channel information according to the downlink reference signal;
determine the first network model according to the first channel information.

Optionally, the terminal 700 also includes:

a second sending unit, configured to send a first uplink signal to the network device; wherein the first uplink signal carries first indication information used for indicating the first network model.

Optionally, the first channel information includes L pieces of channel information, where L is a positive integer, wherein

in case that different pieces of channel information are encoded and/or decoded through different network models, the first indication information includes N1 bits, and the N1 bits are used for indicating the network models corresponding to the different pieces of channel information respectively, wherein

$$N1 = \left\lceil \log_2(C_I^L) \right\rceil ;$$

in case that different pieces of channel information are encoded and/or decoded through a same network model, the first indication information includes N2 bits, and the N2 bits are used for indicating the same network model, wherein N2 = $\left\lceil \log_2(I) \right\rceil$

Optionally, the first processing unit 720 is further configured to:

perform encoding and/or decoding based on the first channel information through the I network models respectively, to obtain second channel information corresponding to each network model;
calculate a target parameter corresponding to each network model based on the first channel information and the second channel information corresponding to each network model;
in case that the I network models include M ≥ 1 network model whose target parameter meets a preset condition, select from the M network models a network model through which the encoding yields the encoded data having a smallest quantity of elements, and determine the selected network model as the first network model;
in case that the I network models include M=0 network model whose target parameter meets the preset condition, select from the I network models a network model through which the encoding yields the encoded data having a largest quantity of elements, and determine the selected network model as the first network model.

Optionally, the first processing unit 720 is further configured to:

calculate, through a target criterion, the target parameter corresponding to each network model based on the first channel information and the second channel information corresponding to each network model;
wherein the target criterion is a cosine similarity criterion, or the target criterion is a normalized mean square error criterion, or the target criterion is a broadband signal to interference and noise ratio criterion.

Optionally, the terminal 700 also includes:
a third sending unit, configured to send a second uplink signal to the network device; wherein the second uplink signal is used by the network device to determine the first network model.

Optionally, the second uplink signal is an uplink reference signal; or the second uplink signal carries a Precoding Matrix Indicator (PMI).

Optionally, the first channel information includes L pieces of channel information, and L is a positive integer; wherein, the l-th channel information among the L pieces of channel information includes one of the followings:

downlink channel information $H_l$ corresponding to an *l-th* receiving antenna in a first frequency domain unit, wherein, $H_l \in \mathbb{C}^{N_c \times N_t}$, $l \in \{1,...,P1\}$, $N_t$ is a quantity of transmitting antenna ports of the network device, $N_c$ is a quantity of frequency domain units in the first frequency domain unit, $P1$ is a quantity of receiving antennas of the terminal;

a received signal $Y_l$ of a downlink reference signal passing through a channel that is received by the *l-th* receiving antenna in the first frequency domain unit, wherein $Y_l \in \mathbb{C}^{N_c \times N_t}$, $l \in \{1,...,P1\}$;

an *l-th* eigenvector $U_l$ obtained by a singular value decomposition of downlink channel information in the first frequency domain unit, wherein $U_l \in \mathbb{C}^{N_c \times N_t}$, $l \in \{1, ..., P2\}$, $P2$ is a quantity of eigenvectors;

a precoding vector $V_l$ of an *l-th* data stream in the first frequency domain unit, wherein $V_l \in \mathbb{C}^{N_c \times N_t}$, $l \in \{1, ..., P3\}$, $P3$ is a quantity of data streams;

a combination of precoding vectors of R data streams in the first frequency domain unit, wherein L= 1;

a combination of received signals of a downlink reference signal passing through channels that correspond to R receiving antennas respectively in the first frequency domain unit, wherein L=1;

a combination of pieces of downlink channel information corresponding to the R receiving antennas respectively in the first frequency domain unit, wherein L=1;

a combination of R eigenvectors obtained by a singular value decomposition of the downlink channel information in the first frequency domain unit, wherein L= 1;

a combination of precoding vectors of R data streams in the first frequency domain unit and (v1-R) zero vectors $0_j$, wherein L=1, $0_j \in \mathbb{C}^{N_c \times N_t}$, $j \in \{R + 1, ..., v1\}$, v1 is a maximum quantity of data streams that the terminal is capable of transmitting;

a combination of the pieces of downlink channel information corresponding to the R receiving antennas respectively in the first frequency domain unit and (v2-R) zero vectors, wherein L=1, v2 is a maximum quantity of receiving antennas of the terminal;

a combination of the received signals of the downlink reference signal passing through the channels that correspond to the R receiving antennas respectively in the first frequency domain unit and the (v2-R) zero vectors, wherein L=1;

a combination of the R eigenvectors obtained by the singular value decomposition of the downlink channel information in the first frequency domain unit and the (v1-R) zero vectors, wherein L=1;

channel information $\breve{H}_l$ obtained by a two-dimensional Fourier transformation of the channel information in the first frequency domain unit, wherein $\breve{H}_l \in \mathbb{C}^{N_c \times N_t}$, $l \in \{1, ..., P2\}$;

partial channel information $\hat{H}_l$ retained after truncating channel information in the frequency domain of the $\breve{H}_l$, wherein, $\hat{H}_l \in \mathbb{C}^{N_c \times N_t}$, $N_c < N_c$;

wherein the first frequency domain unit is all frequency domain units or one frequency domain unit.

Optionally, the frequency domain unit is one subcarrier, or the frequency domain unit is one Physical Resource Block (PRB), or the frequency domain unit is one sub-band including multiple PRBs.

Optionally, the first sending unit 740 is further configured to:

perform quantization processing on a first element in the encoded data, and transmit quantized data to the network device, wherein the first element is part or all of elements in the encoded data

Optionally, the first element includes one of the followings:

$K_1$ non-zero element in the encoded data, wherein $K_1$ is a positive integer, $K_1 \le K_0$, $K_0$ is a quantity of all elements in the encoded data;
$K_1$ elements in the encoded data that are determined based on a mask vector;
consecutive $K_1$ elements starting from a first position in the encoded data.

Optionally, the first channel information includes L pieces of channel information, and $L \ge 1$; and the terminal 700 further includes one of the followings:

a fourth sending unit, configured to, when $L \ge 1$, send third indication information to the network device, wherein one piece of channel information corresponds to one piece of third indication information, and the third indication information is used for indicating a quantity of the first element and/or a position of the first element in the encoded data;
a fifth sending unit, configured to, when L> 1, in case that the quantity of the first element and/or the position of the first element in the encoded data resulting from encoding a first partial channel information is the same, send common fourth indication information for the first partial channel information to the network device, wherein the fourth indication information is used for indicating the quantity of the first element and/or the position of the first element in the encoded data; the first partial channel information is part or all of the L pieces of channel information;

a sixth sending unit, configured to, when L>1, send fifth indication information indicating for the L pieces of channel information jointly to the network device, wherein the fifth indication information is used for indicating the quantity of the first element and/or the position of the first element in the encoded data resulting from encoding each piece of channel information; or, the fifth indication information is used for indicating a total quantity of the first elements in L encoded data resulting from encoding the L pieces of channel information and/or positions of the first elements in the encoded data.

Optionally, in case that the first element includes the $K_1$ non-zero element in the encoded data,

in case that $K_1 < K_0$, the third indication information or the fourth indication information is used for indicating the quantity $K_1$ of the non-zero element and a position of the $K_1$ non-zero element in the encoded data;

in case that $K_1 = K_0$, the third indication information or the fourth indication information is used for indicating the quantity $K_1$ of the non-zero element.

Optionally, the third indication information or the fourth indication information includes N3 bits, and the N3 bits are used for indicating the quantity $K_1$ of the first element, wherein $N3 = \lceil \log_2(K_0) \rceil$.

Optionally, in case that the first element includes the $K_1$ elements in the encoded data that are determined based on a mask vector, or consecutive $K_1$ elements starting from the first position in the encoded data:

the third indication information or the fourth indication information includes N4 bits, the N4 bits are used for indicating a quantity $K_2$ of non-zero element in the $K_1$ elements, and the third indication information or the fourth indication information is also used for indicating a position of the $K_2$ non-zero element in the encoded data,

wherein $N4 = \lceil \log_2(K_1) \rceil$, $K_2 \leq K_1$.

Optionally, the fifth indication information includes N5 bits, and the N5 bits are used for indicating the quantity of the first element in the encoded data resulting from encoding each piece of channel information;

wherein $N5 = \lceil \log_2(\overline{K}) \rceil$, $\overline{K}$ is a maximum quantity of reported elements in each encoded data;

or,

the fifth indication information includes N6 bits, and the N6 bits are used for indicating a total quantity of the first elements in the L encoded data; wherein $N6 = \lceil \log_2(\overline{K}_{tot}) \rceil$, $\overline{K}_{tot}$ is a maximum total quantity of reported elements in the L encoded data.

Optionally, the terminal 700 also includes:

a second processing unit, configured to obtain restored second channel information through the first network model based on data resulting from the processing of the encoded data;

a first calculation unit, configured to calculate a Channel Quality Indicator (CQI) based on the second channel information;

a seventh sending unit, configured to send the CQI to the network device.

Optionally, the terminal 700 also includes:

a second receiving unit, configured to receive a beamformed channel information reference signal sent by the network device; wherein a beam used by the channel information reference signal is determined based on the channel information restored by the network device;

a third processing unit, configured to determine valid channel information based on the channel information reference signal;

a second calculation unit, configured to calculate the CQI according to the valid channel information;

an eighth sending unit, configured to send the CQI to the network device.

Optionally, the terminal 700 also includes:
a ninth sending unit, configured to send interference-and-noise-related information of the downlink channel to the network device; wherein the interference-and-noise-related information of the downlink channel is used by the network device to calculate the CQI.

It should be noted that the division of units in the embodiments of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the related art, of the technical solution of the present disclosure may be implemented in a form of a software product. The computer software product is stored in a storage medium, and includes several instructions to cause a computer device (which can be a personal computer, a server, or a network device, etc.) or a processor to execute all or part of the steps of the methods described in various embodiments of the present disclosure. The aforementioned storage media include: USB flash disk, removable hard disk, Read-Only Memory (ROM), Random Access Memory (RAM), magnetic disk or optical disc and other media that can store program code.

It should be noted here that the above-mentioned terminal provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

In order to better achieve the above purpose, as shown in Fig. 8, an information processing apparatus is provided. The information processing apparatus includes a memory 801, a transceiver 802, and a processor 803; wherein the memory 807 is configured to store a computer program; the transceiver 802 is configured to receive and send data under the control of the processor 803; the processor 803 is configured to read the computer program in the memory 801 and perform the following operations:

> receiving a downlink signal sent by a network device;
> determining a first network model according to the downlink signal; wherein the first network model is at least one of I network models that are pre-deployed or downloaded from the network device side, and I is a positive integer;
> encoding first channel information through the first network model, to obtain to-be-transmitted encoded data; and
> processing the encoded data and then sending data resulting from the processing of the encoded data to the network device.

Optionally, the downlink signal is a downlink reference signal; the processor 803 is configured to read the computer program in the memory 801 and perform the following operations:

> determining the first channel information according to the downlink reference signal; and
> determining the first network model according to the first channel information.

Optionally, the processor 803 is configured to read the computer program in the memory 801 and perform the following operation:
sending a first uplink signal to the network device, wherein the first uplink signal carries first indication information used for indicating the first network model.

Optionally, the first channel information includes L pieces of channel information, where L is a positive integer, wherein

> in case that different pieces of channel information are encoded and/or decoded through different network models, the first indication information includes N1 bits, and the N1 bits are used for indicating the network models corresponding to the different pieces of channel information respectively, wherein

$$N1 = \left\lceil \log_2(C_I^L) \right\rceil;$$

in case that different pieces of channel information are encoded and/or decoded through a same network model, the first indication information includes N2 bits, and the N2 bits are used for indicating the same network model, wherein N2 = $\left\lceil \log_2(I) \right\rceil$

Optionally, the processor 803 is configured to read the computer program in the memory 801 and perform the following operations:

> performing encoding and/or decoding based on the first channel information through the I network models respectively, to obtain second channel information corresponding to each network model;
> calculating a target parameter corresponding to each network model based on the first channel information and the second channel information corresponding to each network model;
> in case that the I network models include $M \geq 1$ network model whose target parameter meets a preset condition, selecting from the M network models a network model through which the encoding yields the encoded data having a smallest quantity of elements, and determining the selected network model as the first network model;
> in case that the I network models include M=0 network model whose target parameter meets the preset condition, selecting from the I network models a network model through which the encoding yields the encoded data having a largest quantity of elements, and determining the selected network model as the first network model.

Optionally, the processor 803 is configured to read the computer program in the memory 801 and perform the following operation:

> calculating, through a target criterion, the target parameter corresponding to each network model based on the first channel information and the second channel information corresponding to each network model;
> wherein the target criterion is a cosine similarity criterion, or the target criterion is a normalized mean square error criterion, or the target criterion is a broadband signal to interference and noise ratio criterion.

Optionally, the downlink signal carries second indication information used for indicating the first network model; and the processor 803 is configured to read the computer program in the memory 801 and perform the following operation:

sending a second uplink signal to the network device, wherein the second uplink signal is used by the network device to determine the first network model.

Optionally, the second uplink signal is an uplink reference signal; or the second uplink signal carries a Precoding Matrix Indicator (PMI).

Optionally, the first channel information includes L pieces of channel information, and L is a positive integer; wherein the *l*-th channel information among the L pieces of channel information includes one of the followings:

downlink channel information $H_l$ corresponding to an *l-th* receiving antenna in a first frequency domain unit, wherein, $H_l \in \mathbb{C}^{N_c \times N_t}$, $l \in \{1, ..., P1\}$, $N_t$ is a quantity of transmitting antenna ports of the network device, $N_c$ is a quantity of frequency domain units in the first frequency domain unit, $P1$ is a quantity of receiving antennas of the terminal;

a received signal $Y_l$ of a downlink reference signal passing through a channel that is received by the *l-th* receiving antenna in the first frequency domain unit, wherein $Y_l \in \mathbb{C}^{N_c \times N_t}$, $l \in \{1, ..., P1\}$;

an *l*-th eigenvector $U_l$ obtained by a singular value decomposition of downlink channel information in the first frequency domain unit, wherein $U_l \in \mathbb{C}^{N_c \times N_t}$, $l \in \{1, ..., P2\}$, $P2$ is a quantity of eigenvectors;

a precoding vector $V_l$ of an *l*-th data stream in the first frequency domain unit, wherein $V_l \in \mathbb{C}^{N_c \times N_t}$, $l \in \{1, ..., P3\}$, $P3$ is a quantity of data streams;

a combination of precoding vectors of R data streams in the first frequency domain unit, wherein L= 1;

a combination of received signals of a downlink reference signal passing through channels that correspond to R receiving antennas respectively in the first frequency domain unit, wherein L=1;

a combination of pieces of downlink channel information corresponding to the R receiving antennas respectively in the first frequency domain unit, wherein L=1;

a combination of R eigenvectors obtained by a singular value decomposition of the downlink channel information in the first frequency domain unit, wherein L= 1;

a combination of precoding vectors of R data streams in the first frequency domain unit and (v1-R) zero vectors $0_j$, wherein L=1, $0_j \in \mathbb{C}^{N_c \times N_t}$, $j \in$ {R + 1, ..., v1}, v1 is a maximum quantity of data streams that the terminal is capable of transmitting;

a combination of the pieces of downlink channel information corresponding to the R receiving antennas respectively in the first frequency domain unit and (v2-R) zero vectors, wherein L=1, v2 is a maximum quantity of receiving antennas of the terminal;

a combination of the received signals of the downlink reference signal passing through the channels that correspond to the R receiving antennas respectively in the first frequency domain unit and the (v2-R) zero vectors, wherein L=1;

a combination of the R eigenvectors obtained by the singular value decomposition of the downlink channel information in the first frequency domain unit and the (v1-R) zero vectors, wherein L=1;

channel information $\breve{H}_l$ obtained by a two-dimensional Fourier transformation of the channel information in the first frequency domain unit, wherein $\breve{H}_l \in \mathbb{C}^{N_c \times N_t}$, $l \in \{1, ..., P2\}$;

partial channel information retained after truncating channel information in the frequency domain of the $\breve{H}_l$, wherein, $\widehat{H}_l \in \mathbb{C}^{N_c \times N_t}$, $N_c < N_c$;

wherein the first frequency domain unit is all frequency domain units or one frequency domain unit.

Optionally, the frequency domain unit is one subcarrier, or the frequency domain unit is one Physical Resource Block (PRB), or the frequency domain unit is one sub-band including multiple PRBs.

Optionally, the processor 803 is configured to read the computer program in the memory 801 and perform the following operations:

performing quantization processing on a first element in the encoded data, and transmitting quantized data to the network device, wherein the first element is part or all of elements in the encoded data.

Optionally, the first element includes one of the followings:

$K_1$ non-zero element in the encoded data, wherein $K_1$ is a positive integer, $K_1 \leq K_0$, $K_0$ is a quantity of all elements in the encoded data;

$K_1$ elements in the encoded data that are determined based on a mask vector;

consecutive $K_1$ elements starting from a first position in the encoded data.

Optionally, the first channel information includes L pieces of channel information, and L≥1; the processor 803 is configured to read the computer program in the memory 801 and perform one of the following operations:

when L≥1, sending third indication information to the network device, wherein one piece of channel information corresponds to one piece of third indication information, and the third indication information is used for indicating a quantity of the first element and/or a position of the first element in the encoded data;

when L> 1, in case that the quantity of the first element and/or the position of the first element in the encoded data resulting from encoding a first partial channel information is the same, sending common fourth indication information for the first partial channel information to the network device, wherein the fourth indication information is used for indicating the quantity of the first element and/or the position of the first element in the encoded data; the first partial channel information is part or all of the L pieces of channel information;

when L>1, sending fifth indication information indicating for the L pieces of channel information jointly to the network device, wherein the fifth indication information is used for indicating the quantity of the first element and/or the position of the first element in the encoded data resulting from encoding each piece of channel information; or, the fifth indication information is used for indicating a total quantity of the first elements in L encoded data resulting from encoding the L pieces of channel information and/or positions of the first elements in the encoded data.

Optionally, in case that the first element includes the $K_1$ non-zero element in the encoded data,

in case that $K_1 < K_0$, the third indication information or the fourth indication information is used for indicating the quantity $K_1$ of the non-zero element and a position of the $K_1$ non-zero element in the encoded data;

in case that $K_1 = K_0$, the third indication information or the fourth indication information is used for indicating the quantity $K_1$ of the non-zero element.

Optionally, the third indication information or the fourth indication information includes N3 bits, the N3 bits are used for indicating the quantity $K_1$ of the first element,

wherein $N3 = \lceil \log_2(K_0) \rceil$.

Optionally, in case that the first element includes the $K_1$ elements in the encoded data that are determined based on a mask vector, or consecutive $K_1$ elements starting from the first position in the encoded data:

the third indication information or the fourth indication information includes N4 bits, the N4 bits are used for indicating a quantity $K_2$ of non-zero element in the $K_1$ elements, and the third indication information or the fourth indication information is also used for indicating a position of the $K_2$ non-zero element in the encoded data,

wherein $N4 = \lceil \log_2(K_1) \rceil$, $K_2 \leq K_1$.

Optionally, the fifth indication information includes N5 bits, and the N5 bits are used for indicating the quantity of the first element in the encoded data resulting from encoding each piece of channel information;

wherein $N5 = \lceil \log_2(\overline{K}) \rceil$, $\overline{K}$ is a maximum quantity of reported elements in each encoded data;

or,

the fifth indication information includes N6 bits, and the N6 bits are used for indicating a total quantity of the first elements in the L encoded data; wherein $N6 = \lceil \log_2(\overline{K}_{tot}) \rceil$, $\overline{K}_{tot}$ is a maximum total quantity of reported elements in the L encoded data.

Optionally, the processor 803 is configured to read the computer program in the memory 801 and perform the following operations:

obtaining restored second channel information through the first network model based on data resulting from the processing of the encoded data; calculating a Channel Quality Indicator (CQI) based on the second channel information; and sending the CQI to the network device.

Optionally, the processor 803 is configured to read the computer program in the memory 801 and perform the following operations:

receiving a beamformed channel information reference signal sent by the network device, wherein a beam used by the channel information reference signal is determined based on channel information restored by the network device; determining valid channel information based on the channel information reference signal; calculating a CQI based on the valid channel information; sending the CQI to the network device.

Optionally, the processor 803 is configured to read the computer program in the memory 801 and perform the following operation:

sending interference-and-noise-related information of a downlink channel to the network device, wherein the interference-and-noise-related information of the downlink channel is used by the network device to calculate a CQI.

In FIG. 8, the bus architecture may include any number of interconnected buses and bridges, and connects various circuits including one or more processors represented by the processor 803 and the memory represented by the memory 801. The bus architecture can also link together various other circuits such as peripherals, voltage regulators, and power management circuits, which are all well known in the art and therefore will not be described further herein. The bus interface provides the interface. The transceiver 802 may be a plurality of elements, including a transmitter and a receiver, to allow for communication with various other apparatuses on the transmission medium. The transmission medium includes wireless channels, wired channels, optical cables, and other transmission media. For different user equipments, the user interface 804 can also be an interface capable of externally or internally connecting a required device. The connected device includes but is not limited to a keypad, a display, a speaker, a microphone, a joystick, etc.

The processor 803 is responsible for managing the bus architecture and general processing, and the memory 801 can store data used by the processor 803 when performing operations.

The processor 803 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

It should be noted here that the above-mentioned apparatus provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

An embodiment of the present disclosure further provides a processor-readable storage medium. The processor-readable storage medium stores a computer program. The computer program is used to cause the processor to execute the steps in the above information processing method, and can achieve the same technical effect. The parts and beneficial effects of the embodiment that are the same as the method embodiments will no longer be described in detail.

The processor-readable storage medium may be any available media or data storage device that the processor can access, including but not limited to magnetic storage (such as floppy disks, hard disks, magnetic tapes, Magneto-Optical disks (MO)), optical storage (such as Compact Disc (CD), Digital Versatile Disc (DVD), Blu-ray Disc (BD), High-definition Versatile Disc (HVD)), and semiconductor memories (such as Read-Only Memory (ROM), Erasable Programmable ROM (EPROM), Electrically Erasable Programmable ROM (EEPROM), non-volatile memory (NAND FLASH), Solid State Disk or Solid State Drive (SSD)), etc.

The information processing method of the embodiment of the present disclosure has been introduced above from the terminal side. The information processing method on the network side will be further described below with reference to the accompanying drawings.

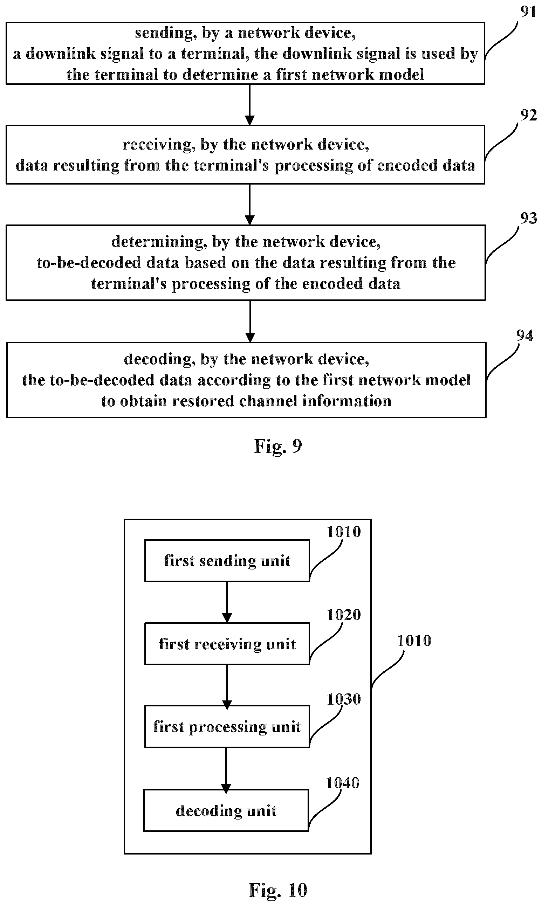

As shown in Fig. 9, an embodiment of the present disclosure provides an information processing method, including the following steps 91 to 94.

Step 91: sending, by a network device, a downlink signal to a terminal.

The downlink signal is used by the terminal to determine a first network model, where the first network model is at least one of I pre-deployed network models, where I is a positive integer.

Optionally, the downlink signal may be a downlink reference signal, and the downlink reference signal may be used by the terminal to determine a first network model for encoding the channel information corresponding to the downlink reference information from I network models that are pre-deployed or downloaded from the network device side; or, the downlink signal may carry first indication information used for indicating the first network model.

Step 92: receiving, by the network device, data resulting from the terminal's processing of encoded data.

The encoded data is obtained by the terminal after encoding first channel information according to the first network model.

Optionally, the first channel information may include L pieces of channel information, which may be CSI, and L is a positive integer, wherein when L is greater than 1, the terminal side may adopt the same network model to encode (or referred to as compress) different pieces of channel information, or may adopt different network models to encode different pieces of channel information. For example, after encoding the first channel information through the network model, the codeword (i.e., the encoded data to be transmitted) corresponding to each channel information can be obtained, to reduce the feedback overhead of the terminal. Further, the terminal processes the L encoded data obtained by encoding the L pieces of channel information and reports the processed data to the network device, so that the network device receives the data resulting from the terminal's processing of the encoded data.

Step 93: determining, by the network device, to-be-decoded data based on the data resulting from the terminal's processing of the encoded data.

Optionally, the terminal may quantize some or all elements in the encoded data and send the quantized data to the network device. Correspondingly, the network device needs to perform dequantization processing on the received data to determine the corresponding encoded data.

Step 94: decoding, by the network device, the to-be-decoded data according to the first network model to obtain restored channel information.

In the above solution, the network device sends a downlink signal to the terminal for the terminal to determine the first network model, and upon receiving the data resulting from the terminal's processing of the encoded data encoded through the first network model, determines the to-be-decoded data based on the data resulting from the terminal's processing of the encoded data, decodes the to-be-decoded data according to the first network model to obtain the restored channel information, thereby ensuring that the terminal side and/or the network device side can determine the network model used for channel information transmission from multiple pre-deployed network models when the multiple network models are deployed on the terminal side and/or the network device side, and reducing the feedback overhead of channel information transmission and improving the system performance.

Optionally, the downlink signal is a downlink reference signal; and before the decoding, by the network device, the to-be-decoded data according to the first network model to obtain the restored channel information, the method further includes:

> receiving, by the network device, the first uplink signal sent by the terminal;
> determining, by the network device, the first network model based on the first uplink signal.

In this embodiment, in case that the terminal side selects a network model for channel information encoding and/or decoding processing (i.e., the first network model) from I network models, after the terminal determines the first network model used for encoding and/or decoding the first channel information, the terminal sends first indication information used for indicating the first network model to the network device, and the first indication information is carried in the first uplink signal, so that the network device may learn the first network model for encoding and/or decoding the first channel information according to the first uplink signal.

Optionally, the first channel information includes L pieces of channel information, where L is a positive integer;

wherein in case that different pieces of channel information are encoded and/or decoded through different network models, the first indication information includes N1 bits, and the N1 bits are used for indicating the network models corresponding to the different pieces of channel information respectively; wherein $N1 = \left\lceil \log_2(C_I^L) \right\rceil$.

In other words, when the terminal sends, to the network device, the first network model used by the terminal to encode and/or decode the first channel information, the terminal may specifically use the N1 bits to indicate different network models corresponding to different pieces of channel information. N1 can be determined according to the quantity L of channel information and the quantity I of network models.

For example: $N1 = \left\lceil \log_2(C_I^L) \right\rceil$, where $C_I^L$ represents selecting L network models from I network models, and L represents the quantity of transmission layers (that is, the quantity of channel information), so the network device can determine the first network model through these N1 bits.

In case that different pieces of channel information are encoded and/or decoded through a same network model, the first indication information includes N2 bits, and the N2 bits are used for indicating the same network model, wherein $N2 = \left\lceil \log_2(I) \right\rceil$.

In other words, when the terminal sends, to the network device, the first network model used by the terminal to encode and/or decode the first channel information, the terminal may specifically use N2 bits to indicate the same network model corresponding to different pieces of channel information. N2 can be determined according to the quantity I of network models. For example: $N2 = \left\lceil \log_2(I) \right\rceil$, so the network device can determine the first network model through these N2 bits.

Optionally, the downlink signal carries second indication information used for indicating the first network model, and before the sending, by the network device, the downlink signal to the terminal, the method further includes:

> receiving, by the network device, a second uplink signal sent by the terminal;
> determining, by the network device, third channel information based on the second uplink signal;
> determining, by the network device, the first network model based on the third channel information.

In this embodiment, in case that the network device side selects a network model for channel information encoding and/or decoding processing (i.e., the first network model) from I network models, after the network device determines the first network model used for encoding and/or decoding the first channel information, the network device sends second indication information to the terminal, so that the terminal learns the first network model used for encoding and/or decoding the first channel information according to the second indication information.

The second uplink signal is an uplink reference signal; or, the second uplink signal carries a Precoding Matrix Indicator (PMI).

For example: before the terminal receives the network model indication information (i.e., the second indication information) sent by the network device side, the terminal sends an uplink signal to the network device side at least once. The uplink signal may be an uplink reference signal, or carry the PMI (Such as Type I or Type II codebook) calculated by the terminal.

The network device side estimates the uplink channel information (that is, determines the third channel information) based on the uplink reference signal. If the uplink and downlink channels are completely reciprocal, the network device can determine the corresponding first network model based on the estimated uplink channel information. Alternatively, the network device side determines the corresponding first network model based on the received PMI, and configures the selected first network model to the terminal through signaling. For example, the network device sends network model indication information (that is, second indication information) to the terminal to indicate the first network model for encoding and/or decoding the first channel information, so that the terminal can perform compressed feedback of the first channel information according to the first network model determined by the second indication information.

Optionally, the network device can select an appropriate first network model from I network models in a traversal manner; specifically, the determining, by the network device, the first network model based on the third channel information includes:

performing, by the network device, encoding and/or decoding based on the third channel information through the I network models respectively to obtain fourth channel information corresponding to each network model;

calculating, by the network device, a target parameter corresponding to each network model based on the third channel information and the fourth channel information corresponding to each network model;

in case that the I network models include $M \geq 1$ network model whose target parameter meets a preset condition, selecting, by the network device, from the M network models a network model through which the encoding yields the encoded data having a smallest quantity of elements, and determining, by the network device, the selected network model as the first network model;

in case that the I network models include M=0 network model whose target parameter meets the preset condition, selecting, by the network device, from the I network models a network model through which the encoding yields the encoded data having a largest quantity of elements, and determining, by the network device, the selected network model as the first network model.

Specifically, taking the first network model including an encoder and a decoder as an example, the performing, by the network device, encoding and/or decoding based on the third channel information through the I network models respectively to obtain fourth channel information corresponding to each network model may include: the network device uses the third channel information as the input to the encoder in the first network model to obtain compressed encoded data; the network device may perform a first processing on the encoded data (e.g., truncation through a mask vector and/or quantization processing, etc.) and perform a second processing on the data subjected to the first processing (e.g., the second processing can be understood as an inverse of the first processing, such as dequantization processing and/or masking vector populating, etc.); the network device uses the data subjected to the second processing as the input to the decoder in the first network model, and performs decoding to obtain the restored channel information (i.e., the fourth channel information).

It is noted that the performing, by the network device, encoding and/or decoding based on the third channel information through the I network models respectively to obtain fourth channel information corresponding to each network model is not limited to obtaining, by the network device, fourth channel information corresponding to all network models. That is to say, the network device may obtain the restored fourth channel information based on the third channel information for all network models, and then select the first network model based on the target parameters determined by the third channel information and the fourth channel information; or, the network device may obtain the restored fourth channel information based on the third channel information for only some network models. For example, when the network device performs encoding and/or decoding processing based on the third channel information through the I network models in sequence to obtain the fourth channel information corresponding to each network model, if the first network model can be selected from i network models through judgment based on the target parameter determined by the i-th network model, then the next (I-i) network models can no longer be used to obtain the restored fourth channel information based on the third channel information, thereby improving processing efficiency.

Optionally, the calculating, by the network device, the target parameter corresponding to each network model based on the third channel information and the fourth channel information corresponding to each network model includes:

calculating, by the network device through a target criterion, the target parameter corresponding to each network model based on the third channel information and the fourth channel information corresponding to each network model;

wherein the target criterion is a cosine similarity criterion, or the target criterion is a normalized mean square error criterion, or the target criterion is a broadband signal to interference and noise ratio criterion.

Specifically, taking the broadband signal to interference and noise ratio criterion as an example, an optional embodiment of determining the first network model according to the present disclosure is described below:

step A1: performing, by the network device, encoding and/or decoding processing based on the third channel information through the i-th network model in the I network models, to obtain the i-th fourth channel information;

step A2: calculating, by the network device, the i-th target parameter based on the third channel information and the i-th fourth channel information;

if the i-th target parameter is greater than a preset threshold, then setting i=i+1 and repeating the step A1;

if the i-th target parameter is less than or equal to the preset threshold, then setting i=i+1 and repeat the step A1 until the i-th target parameter is greater than the preset threshold;

step A3: if i≤I and there are M network models whose target parameters are less than or equal to the preset threshold, then determining, by the network device, a network model among the M network models that outputs encoded data having a smallest quantity of elements (that is, the smallest length of the encoded data) as the first network model, wherein M is a positive integer;

if i=I and the target parameters corresponding to the I network models are all greater than the preset threshold, then determining, by the network device, a network model among the I network models that outputs encoded data having the largest quantity of elements as the first network model.

For example, if the corresponding broadband signal to interference and noise ratio $\gamma_{WB,i} < \gamma_T$ calculated according to the i-th network model demonstrates that the selected i-th network model cannot meet the requirement, the broadband signal to interference and noise ratio $\gamma_{WB,i+1}$ corresponding to the (i+1)-th network model is calculated successively, until the calculated $\gamma_{WB,i} \geq \gamma_T$. Finally, the network model which meets the requirement $\gamma_{WB,i} \geq \gamma_T$ and whose encoder outputs the shortest codeword length (i.e., the quantity of elements in the encoded data is the smallest) is determined as the first network model. Wherein, $\gamma_T$ represents the preset threshold value.

If it is calculated based on the i-th network model that $\gamma_{WB,i} \geq \gamma_T$, although the currently selected network model can meet the requirement, the length of the codeword output by the network model may be too large. The broadband signal to interference and noise ratio $\gamma_{WB,i+1}$ corresponding to the (i+1)-th network model may be calculated successively, until the calculated $\gamma_{WB,i} < \gamma_T$. Finally, a network model outputting the shortest codeword length among all models meeting $\gamma_{WB,i} \geq \gamma_T$ is determined as the first network model.

If the calculated broadband signal-to-noise ratios corresponding to all network models cannot meet the requirement, then the network model corresponding to the largest codeword length is determined as the first network model.

Optionally, the network device can also determine the selected network model based on the uplink transmission resources of the terminal.

Optionally, the first channel information includes L pieces of channel information, where L is a positive integer; wherein

in case that different pieces of channel information are encoded and/or decoded through different network models, the second indication information includes N1 bits, and the N1 bits are used for indicating the network models corresponding to the different pieces of channel information respectively, wherein $N1 = \lceil \log_2(C_I^L) \rceil$.

In other words, when the network device sends, to the terminal, the first network model used by the terminal to encode and/or decode the first channel information, the network device may specifically use the N1 bits to indicate different network models corresponding to different pieces of channel information. N1 can be determined according to the quantity L of channel information and the quantity I of network models. For example:

$N1 = \lceil \log_2(C_I^L) \rceil$, where $C_I^L$ represents selecting L network models from I network models, and L represents the quantity of transmission layers (that is, the quantity of channel information).

In case that different pieces of channel information are encoded and/or decoded through a same network model, the second indication information includes N2 bits, and the N2 bits are used for indicating the same network model, wherein N2 = $\lceil \log_2(I) \rceil$.

In other words, when the network device sends, to the terminal, the first network model used by the terminal to encode and/or decode the first channel information, the network device may specifically use N2 bits to indicate the same network model corresponding to different pieces of channel information. N2 can be determined according to the quantity I of network models. For example: N2 = $\lceil \log_2(I) \rceil$.

Optionally, the first channel information includes L pieces of channel information, and L ≥ 1; before the determining, by the network device, the to-be-decoded data based on the data resulting from the terminal's processing of the encoded data, the method also includes one of the followings:

when L≥ 1, receiving, by the network device, third indication information sent by the terminal, wherein one piece of channel information corresponds to one piece of third indication information, and the third indication information is used for indicating a quantity of first element and/or a position of the first element in the encoded data, wherein the first element is part or all of elements in the encoded data; that is, the terminal determines the first element independently for L pieces of channel information and independently reports the quantity of the first element and/or the position of the first element in the encoded data;
when L> 1, receiving, by the network device, common fourth indication information sent by the terminal for first partial channel information; wherein the first partial channel information is part or all of the L pieces of channel information, and the quantity of the first element and/or the position of the first element in the encoded data resulting from encoding the first partial channel information is the same, the fourth indication information is used for indicating the quantity of the first element and/or the position of the first element in the encoded data; that is, for the first partial channel information among the L pieces of channel information, because the quantity of first elements in the encoded data resulting from encoding thereof and/or the position of the first element in the encoded data is the same, the terminal may report the quantity of the first element and/or the position of the first element in the encoded data to the network device through one common indication information; when L> 1, receiving, by the network device, fifth indication information sent by the terminal that indicates for the L pieces of channel information jointly, wherein the fifth indication information is used for indicating the quantity of the first element and/or the position of the first element in the encoded data resulting from encoding each piece of channel information; or, the fifth indication information is used for indicating a total quantity of the first elements in L encoded data resulting from encoding the L pieces of channel information and/or positions of the first elements in the encoded data.

Optionally, in case that the first element includes the $K_1$ non-zero element in the encoded data:

> in case that $K_1 < K_0$, the third indication information or the fourth indication information is used for indicating the quantity $K_1$ of the non-zero element and a position of the $K_1$ non-zero element in the encoded data;
> in case that $K_1 = K_0$, the third indication information or the fourth indication information is used for indicating the quantity $K_1$ of the non-zero element.

For example: in case that $K_1 < K_0$, that is, some elements in the encoded data are non-zero elements, the terminal needs to indicate to the network device the quantity $K_1$ of the non-zero element and the position of the $K_1$ non-zero elements in the encoded data, for example, the terminal can indicate the position of the non-zero element in the codeword through one bitmap or combinatorial number, and report it to the network side. In case that $K_1 = K_0$, that is, when all elements in the encoded data are non-zero elements, the terminal can indicate the quantity $K_1$ of the non-zero element to the network device. In this case, there is no need to indicate the position of the non-zero element in the encoded data.

Optionally, the third indication information or the fourth indication information includes N3 bits, and the N3 bits are used for indicating the quantity $K_1$ of the first element, wherein $N3 = \lceil \log_2(K_0) \rceil$.

In other words, for any one of the above manners of determining some or all elements in the encoded data, the terminal may indicate the quantity $K_1$ of the first element through the N3 bits. N3 can be determined based on the quantity $K_0$ of all elements in the encoded data, e.g., $N3 = \lceil \log_2(K_0) \rceil$. At the same time, the terminal also indicates the positions of $K_1$ first elements in the encoded data through a bitmap or a combinatorial number.

Optionally, in case that the first element includes the $K_1$ elements in the encoded data that are determined based on a mask vector, or consecutive $K_1$ elements starting from the first position in the encoded data, the third indication information or the fourth indication information includes N4 bits, the N4 bits are used for indicating a quantity $K_2$ of non-zero element in the $K_1$ elements, and the third indication information or the fourth indication information is also used for indicating a position of the $K_2$ non-zero element in the encoded data, wherein $N4 = \lceil \log_2(K_1) \rceil$, $K_2 \le K_1$.

In other words, for any one of the above manners of determining some or all elements in the encoded data, the terminal may indicate the quantity $K_2$ of non-zero elements in the $K_1$ first elements through N4 bits. N4 can be determined according to the quantity $K_1$ of the first element, e.g., $N4 = \lceil \log_2(K_1) \rceil$. At the same time, the terminal also indicates the position of the $K_2$ non-zero elements to the network device through a bitmap or combinatorial number. At this time, the terminal quantizes the $K_2$ non-zero elements and reports the quantized elements to the network device, and other elements are not reported.

Optionally, the fifth indication information includes N5 bits, and the N5 bits are used for indicating the quantity of the first element in the encoded data resulting from encoding each piece of channel information; wherein $N5 = \lceil \log_2(\overline{K}) \rceil$, $\overline{K}$ is a maximum quantity of reported elements in each encoded data; or, the fifth indication information includes N6 bits, and the N6 bits are used for indicating a total quantity of the first elements in the L encoded data; wherein $N6 = \lceil \log_2(\overline{K}_{tot}) \rceil$, $\overline{K}_{tot}$ is a maximum total quantity of reported elements in the L encoded data.

For example, the terminal may determine the quantity of the to-be-reported first elements and/or the positions of the first elements in the L encoded data jointly. The quantities of reported first elements in different encoded data may be different and/or the positions of the first elements in different encoded data may be different. Optionally, the quantity of reported first element in each encoded data and/or the position of the first element in the encoded data can be indicated to the network device in the abovementioned independent reporting manner; or jointly reported to the network device, for example, the terminal can use N5 bits to indicate the quantity of the first element in the encoded data resulting from encoding each piece of channel information. N5 can be determined based on a maximum quantity $\overline{K}$ of reported elements in each encoded data, e.g.,

$$\text{N5} = \lceil \log_2(\overline{K}) \rceil$$

$\overline{K}$ can be configured by the network to the terminal or can be predefined. For example, the terminal can also indicate a total quantity of the first elements in the L encoded data through N6 bits, and N6 can be determined based on a maximum total quantity $\overline{K}_{tot}$ of reported elements in the L encoded data, e.g.,

$$\text{N6} = \lceil \log_2(\overline{K}_{tot}) \rceil$$

$\overline{K}_{tot}$ can be configured by the network to the terminal or can be predefined. At this time, the terminal can also indicate the positions of the reported first elements in different encoded data through the bitmaps or combinatorial numbers corresponding to respective encoded data.

Optionally, the first element includes one of the followings:

$K_1$ non-zero element in the encoded data, wherein $K_1$ is a positive integer, $K_1 \leq K_0$, $K_0$ is a quantity of all elements in the encoded data;
$K_1$ elements in the encoded data that are determined based on a mask vector;
consecutive $K_1$ elements starting from a first position in the encoded data.

Optionally, the determining, by the network device, the to-be-decoded data based on the data resulting from the terminal's processing of the encoded data includes:

performing, by the network device, dequantization processing on the data resulting from the terminal's processing of the encoded data to obtain de-quantized data;
determining, by the network device, the to-be-decoded data based on the de-quantized data through the third indication information, or the fourth indication information, or the fifth indication information.

For example: the network device side uses the quantized data reported by the terminal as the input to the de-quantizer module to obtain the de-quantized data, and then obtains the restored encoded data (that is, the to-be-decoded data) based on the dequantized data and the third indication information, or the fourth indication information, or the fifth indication information used for indicating the quantity and/or position of first element, and decodes the to-be-decoded data through the decoder of the corresponding first network model to finally obtain the restored channel information.

Alternatively, the network device side uses the quantized data reported by the terminal as the input to the de-quantizer module to obtain the de-quantized data, and then inputs the de-quantized data into the mask vector populating module to obtain the restored encode data (that is, the to-be-decoded data), decodes the to-be-decoded data through the decoder of the corresponding first network model to finally obtain restored channel information.

Optionally, the determining, by the network device, the to-be-decoded data based on the de-quantized data through the third indication information, or the fourth indication information, or the fifth indication information includes one of the followings:

determining, by the network device, the to-be-decoded data based on the de-quantized data through a mask vector; for example, the network device side can determine the to-be-decoded data based on the mask vector, where the mask vector corresponds to the network model, i.e., when the network model is determined, its corresponding mask vector can also be determined, that is, the mask vector can also be selected by the terminal, or configured by the network to the terminal; for example, the network device can output the to-be-decoded data through the mask vector populating module based on the data resulting from the terminal's processing of the encoded data; the first $K_1$ or last $K_1$ elements of the to-be-decoded data can be the de-quantized data, and the remaining $K_0 - K_1$ elements are populated with 0;
determining, by the network device, the to-be-decoded data based on the de-quantized data through the quantity of the first element; for example, the network device side may determine the quantity $K_1$ of first elements reported by the terminal based on the third indication information or the fourth indication information or the fifth indication; for example, the network device can output the to-be-decoded data through the mask vector populating module based on the data resulting from the terminal's processing of the encoded data; the first $K_1$ or last $K_1$ elements of the to-be-decoded data can be the de-quantized data, and the remaining $K_0 - K_1$ elements are populated with 0;
determining, by the network device, the to-be-decoded data based on the de-quantized data through the position of the first element in the encoded data; for example, the terminal reports a bitmap indicating the position of the non-zero element in the encode data resulting from the encoding of the channel information, the network device determines the to-be-decoded data based on the position of the non-zero element indicated by the bitmap and the dequantized data; for example, the position of the non-zero element in the to-be-decoded data is occupied by the dequantized data, and the remaining position is populated with 0;

determining, by the network device, the to-be-decoded data based on the de-quantized data through the quantity of non-zero element and the position of the non-zero element in the encoded data; for example, the network device side can determine the quantity $K_2 < K_0$ of non-zero element and the position of the non-zero element reported by the terminal based on the third indication information or the fourth indication information or the fifth indication information; for example, the network device can output the to-be-decoded data through the mask vector populating module based on the data resulting from the terminal's processing of the encoded data; the positions of $K_2$ non-zero elements in the to-be-decoded data are occupied by the dequantized data, and the positions of $K_0 - K_2$ elements are populated with 0;

determining, by the network device, the to-be-decoded data based on the data resulting from the terminal's processing of the encoded data through the quantity of the first element, the quantity of non-zero element in the first element and the position of the non-zero element in the encoded data; for example, the network device side can determine the quantity $K_1$ of first elements, the quantity $K_2$ of non-zero element in the $K_1$ first elements and the position of non-zero element that are reported by the terminal according to the third indication information or the fourth indication information or the fifth indication information; for example, the network device can output the to-be-decoded data through the mask vector populating module based on the data resulting from the terminal's processing of the encoded data; the positions of $K_2$ non-zero elements in the to-be-decoded data are occupied by the dequantized data, and the positions of remaining $K_0 - K_1$ elements and $K_1 - K_2$ elements are populated with 0.

Optionally, the method also includes:

receiving, by the network device, Channel Quality Indicator (CQI) sent by the terminal.

Specifically, the terminal obtains the restored second channel information through the first network model based on the data obtained by processing the encoded data resulting from encoding the channel information; calculates a Channel Quality Indicator (CQI) based on the second channel information, and sends the CQI to the network device.

For example: the terminal can perform quantization processing on the first element in the encoded data through the quantizer module to obtain the quantized data, and then input the quantized data to the corresponding de-quantizer module for dequantization processing, and input the de-quantized data to the decoder in the first network model for decoding to obtain the restored second channel information, and then calculate the CQI based on the restored second channel information.

Alternatively, the terminal may process the encoded data through the mask vector module to determine the first element, and quantize the first element through the quantizer module to obtain quantized data, and then input the quantized data into the corresponding de-quantizer module to perform dequantization processing, input the quantized data to the mask vector populating module for processing, input the processed data to the decoder in the first network model for decoding to obtain the restored second channel information, and then calculate the CQI based on the restored second channel information.

Optionally, the method also includes:

sending, by the network device, a beamformed channel information reference signal to the terminal; wherein a beam used by the channel information reference signal is determined based on the channel information restored by the network device;

receiving, by the network device, the CQI sent by the terminal; wherein the CQI is calculated by the terminal according to the channel information reference signal.

Specifically, the terminal receives the beamformed channel information reference signal; determines valid channel information based on the channel information reference signal; calculates the CQI based on the valid channel information, and sends the CQI to the network device.

For example: the channel information reference signal can be a CSI Reference Signal (CSI-RS). The terminal estimates the downlink valid channel information based on the received beamformed CSI-RS, and then calculates the CQI based on the estimated valid channel information, where the beam used by the CSI-RS is determined by the channel information restored by the first network model on the network device side.

Optionally, the method also includes:

receiving, by the network device, interference-and-noise-related information of a downlink channel sent by the terminal;

calculating, by the network device, the CQI based on the interference-and-noise-related information of the downlink channel and the restored channel information.

It should be noted that in the embodiments of the present disclosure, the information processing methods on the terminal side and the network device side are corresponding to each other, and the two embodiments can be referred to each other, and a repeated description will be avoided.

The above embodiment introduces the information processing method on the network device side of the present disclosure. The embodiment below will further describe the corresponding network device in conjunction with the accompanying drawings.

Specifically, as shown in Fig. 10, an embodiment of the present disclosure provides a network device 1000, including:

a first sending unit 1010, configured to send a downlink signal to a terminal; wherein the downlink signal is used by the terminal to determine a first network model, and the first network model is at least one of I pre-deployed network models, I is a positive integer; a first receiving unit 1020, configured to receive data resulting from the terminal's processing of encoded data; wherein the encoded data is obtained by the terminal after encoding first channel information according to the first network model; a first processing unit 1030, configured to determine to-be-decoded data based on the data resulting from the terminal's processing of the encoded data; a decoding unit 1040, configured to decode the to-be-decoded data according to the first network model to obtain restored channel information.

Optionally, the downlink signal is a downlink reference signal; the network device 1000 further includes:

a second receiving unit, configured to receive the first uplink signal sent by the terminal; a second processing unit, configured to determine the first network model according to the first uplink signal.

Optionally, the downlink signal carries second indication information used for indicating the first network model; the network device 1000 further includes:

a third receiving unit, configured to receive the second uplink signal sent by the terminal; a third processing unit, configured to determine third channel information according to the second uplink signal; a fourth processing unit, configured to determine the first network model according to the third channel information.

Optionally, the second uplink signal is an uplink reference signal; or, the second uplink signal carries a Precoding Matrix Indicator (PMI).

Optionally, the fourth processing unit is further configured to:

perform encoding and/or decoding based on the third channel information through the I network models respectively to obtain fourth channel information corresponding to each network model; calculate a target parameter corresponding to each network model based on the third channel information and the fourth channel information corresponding to each network model;

in case that the I network models include $M \geq 1$ network model whose target parameter meets a preset condition, select from the M network models a network model through which the encoding yields the encoded data having a smallest quantity of elements, and determine the selected network model as the first network model; in case that the I network models include M=0 network model whose target parameter meets the preset condition, select from the I network models a network model through which the encoding yields the encoded data having a largest quantity of elements, and determine the selected network model as the first network model.

Optionally, the fourth processing unit is further configured to:

calculate, through a target criterion, the target parameter corresponding to each network model based on the third channel information and the fourth channel information corresponding to each network model; wherein the target criterion is a cosine similarity criterion, or the target criterion is a normalized mean square error criterion, or the target criterion is a broadband signal to interference and noise ratio criterion.

Optionally, the first channel information includes L pieces of channel information, where L is a positive integer, wherein

in case that different pieces of channel information are encoded and/or decoded through different network models, the second indication information includes N1 bits, and the N1 bits are used for indicating the network models corresponding to the different pieces of channel information respectively, wherein

$$N1 = \left\lceil \log_2(C_I^L) \right\rceil ;$$

in case that different pieces of channel information are encoded and/or decoded through a same network model, the second indication information includes N2 bits, and the N2 bits are used for indicating the same network model, wherein $N2 = \left\lceil \log_2(I) \right\rceil$.

Optionally, the first channel information includes L pieces of channel information, and $L \geq 1$; the network device 1000 further includes one of the followings:

a fourth receiving unit, configured to, when $L \geq 1$, receive third indication information sent by the terminal, wherein one piece of channel information corresponds to one piece of third indication information, and the third indication information is used for indicating a quantity of first element and/or a position of the first element in the encoded data, wherein the first element is part or all of elements in the encoded data;

a fifth receiving unit, configured to, when L> 1, receive common fourth indication information sent by the terminal for first partial channel information; wherein the first partial channel information is part or all of the L pieces of channel information, and the quantity of the first element and/or the position of the first element in the encoded data resulting from encoding the first partial channel information is the same, the fourth indication information is used for indicating the quantity of the first element and/or the position of the first element in the encoded data;

a sixth receiving unit, configured to, when L> 1, receive fifth indication information sent by the terminal that indicates for the L pieces of channel information jointly, wherein the fifth indication information is used for indicating the quantity of the first element and/or the position of the first element in the encoded data resulting from encoding each piece of channel information; or, the fifth indication information is used for indicating a total quantity of the first elements in L encoded data resulting from encoding the L pieces of channel information and/or positions of the first elements in the encoded data.

Optionally, the first element includes one of the followings:

$K_1$ non-zero element in the encoded data, wherein $K_1$ is a positive integer, $K_1 \le K_0$, $K_0$ is a quantity of all elements in the encoded data;

$K_1$ elements in the encoded data that are determined based on a mask vector;

consecutive $K_1$ elements starting from a first position in the encoded data.

Optionally, the first processing unit 1030 is further configured to:

perform dequantization processing on the data resulting from the terminal's processing of the encoded data to obtain de-quantized data;

determine the to-be-decoded data based on the de-quantized data through the third indication information, or the fourth indication information, or the fifth indication information.

Optionally, the first processing unit 1030 is further configured to perform one of the followings:

determine the to-be-decoded data based on the de-quantized data through a mask vector;

determine the to-be-decoded data based on the de-quantized data through the quantity of the first element;

determine the to-be-decoded data based on the de-quantized data through the position of the first element in the encoded data;

determine the to-be-decoded data based on the de-quantized data through a quantity of non-zero element and a position of the non-zero element in the encoded data;

determine the to-be-decoded data based on the de-quantized data through the quantity of the first element, a quantity of non-zero element among the first element and the position of the non-zero element in the encoded data.

Optionally, the network device 1000 also includes:

a seventh receiving unit, configured to receive the Channel Quality Indicator (CQI) sent by the terminal.

Optionally, the network device 1000 also includes:

a second sending unit, configured to send a beamformed channel information reference signal to the terminal; wherein a beam used by the channel information reference signal is determined based on the channel information restored by the network device;

an eighth receiving unit, configured to receive the CQI sent by the terminal; wherein the CQI is calculated by the terminal according to the channel information reference signal.

Optionally, the network device 1000 also includes:

a ninth receiving unit, configured to receive interference-and-noise-related information on the downlink channel sent by the terminal;

a calculation unit, configured to calculate CQI based on the interference-and-noise-related information of the downlink channel and the restored channel information.

It should be noted that the division of units in the embodiments of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the related art, of the technical solution of the present disclosure may be implemented in a form of a software product. The computer software product is stored in a storage medium, and includes several instructions to cause a computer device (which can be a personal computer, a server, or a network device, etc.) or a processor to execute all or part of the steps of the methods described in various embodiments of the present disclosure. The aforementioned storage media include: USB flash disk, removable hard disk, Read-Only Memory (ROM), Random Access Memory (RAM), magnetic disk or optical disc and other media that can store program code.

It should be noted here that the above-mentioned network device provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

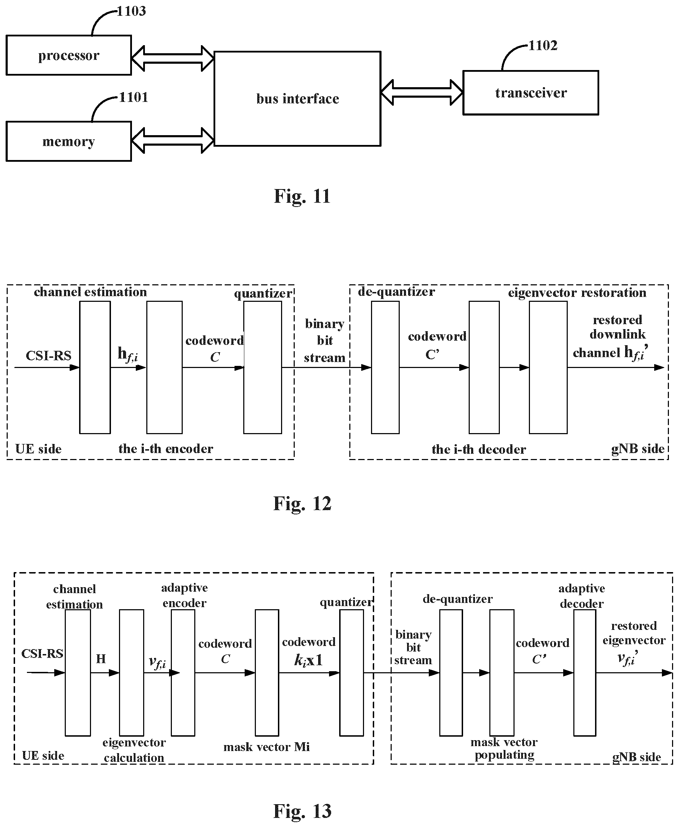

As shown in Fig. 11, an embodiment provides a network device, including a memory 1101, a transceiver 1102, and a processor 1103; the memory 1101 is configured to store a computer program; the transceiver 1102 is configured to send and receive data under the control of the processor 1103; for example, the transceiver 1102 is configured to receive and send data under the control of the processor 1103; the processor 1103 is configured to read the computer program in the memory 1101 and perform the following operations:

> sending a downlink signal to a terminal, wherein the downlink signal is used by the terminal to determine a first network model, and the first network model is at least one of I pre-deployed network models, where I is a positive integer;
> receiving data resulting from the terminal's processing of encoded data, wherein the encoded data is obtained by the terminal after encoding first channel information according to the first network model;
> determining to-be-decoded data based on the data resulting from the terminal's processing of the encoded data;
> decoding the to-be-decoded data according to the first network model to obtain restored channel information.

Optionally, the downlink signal is a downlink reference signal; the processor 1103 is configured to read the computer program in the memory 1101 and perform the following operations:

> receiving the first uplink signal sent by the terminal; determining the first network model based on the first uplink signal.

Optionally, the downlink signal carries second indication information used for indicating the first network model; the processor 1103 is configured to read the computer program in the memory 1101 and perform the following operations:

> receiving a second uplink signal sent by the terminal; determining third channel information based on the second uplink signal;
> determining the first network model based on the third channel information.

Optionally, the second uplink signal is an uplink reference signal; or, the second uplink signal carries a Precoding Matrix Indicator (PMI).

Optionally, the processor 1103 is configured to read the computer program in the memory 1101 and perform the following operations:

> performing encoding and/or decoding based on the third channel information through the I network models respectively to obtain fourth channel information corresponding to each network model;
> calculating a target parameter corresponding to each network model based on the third channel information and the fourth channel information corresponding to each network model;
> in case that the I network models include $M \geq 1$ network model whose target parameter meets a preset condition, selecting from the M network models a network model through which the encoding yields the encoded data having a smallest quantity of elements, and determining the selected network model as the first network model;
> in case that the I network models include M=0 network model whose target parameter meets the preset condition, selecting from the I network models a network model through which the encoding yields the encoded data having a largest quantity of elements, and determining the selected network model as the first network model.

Optionally, the processor 1103 is configured to read the computer program in the memory 1101 and perform the following operation:

> calculating, through a target criterion, the target parameter corresponding to each network model based on the third channel information and the fourth channel information corresponding to each network model;
> wherein the target criterion is a cosine similarity criterion, or the target criterion is a normalized mean square error criterion, or the target criterion is a broadband signal to interference and noise ratio criterion.

Optionally, the first channel information includes L pieces of channel information, where L is a positive integer, wherein

> in case that different pieces of channel information are encoded and/or decoded through different network models, the second indication information includes N1 bits, and the N1 bits are used for indicating the network models corresponding to the different pieces of channel information respectively, wherein

$$N1 = \left\lceil \log_2(C_I^L) \right\rceil$$

; in case that different pieces of channel information are encoded and/or decoded through a same network model, the second indication information includes N2 bits, and the N2 bits are used for indicating the same network model, wherein

$$N2 = \left\lceil \log_2(I) \right\rceil$$

.

Optionally, the first channel information includes L pieces of channel information, and L≥1; the processor 1103 is configured to read the computer program in the memory 1101 and perform one of the following operations:

when L≥1, receiving third indication information sent by the terminal, wherein one piece of channel information corresponds to one piece of third indication information, and the third indication information is used for indicating a quantity of first element and/or a position of the first element in the encoded data, wherein the first element is part or all of elements in the encoded data;

when L>1, receiving common fourth indication information sent by the terminal for first partial channel information; wherein the first partial channel information is part or all of the L pieces of channel information, and the quantity of the first element and/or the position of the first element in the encoded data resulting from encoding the first partial channel information is the same, the fourth indication information is used for indicating the quantity of the first element and/or the position of the first element in the encoded data;

when L> 1, receiving fifth indication information sent by the terminal that indicates for the L pieces of channel information jointly, wherein the fifth indication information is used for indicating the quantity of the first element and/or the position of the first element in the encoded data resulting from encoding each piece of channel information; or, the fifth indication information is used for indicating a total quantity of the first elements in L encoded data resulting from encoding the L pieces of channel information and/or positions of the first elements in the encoded data.

Optionally, the first element includes one of the followings:

$K_1$ non-zero element in the encoded data, wherein $K_1$ is a positive integer, $K_1 \le K_0$, $K_0$ is a quantity of all elements in the encoded data;

$K_1$ elements in the encoded data that are determined based on a mask vector;

consecutive $K_1$ elements starting from a first position in the encoded data.

Optionally, the processor 1103 is configured to read the computer program in the memory 1101 and perform the following operations:

performing dequantization processing on the data resulting from the terminal's processing of the encoded data to obtain de-quantized data;

determining the to-be-decoded data based on the de-quantized data through the third indication information, or the fourth indication information, or the fifth indication information.

Optionally, the processor 1103 is configured to read the computer program in the memory 1101 and perform one of the following operations:

determining the to-be-decoded data based on the de-quantized data through a mask vector;

determining the to-be-decoded data based on the de-quantized data through the quantity of the first element;

determining the to-be-decoded data based on the de-quantized data through the position of the first element in the encoded data;

determining the to-be-decoded data based on the de-quantized data through a quantity of non-zero element and a position of the non-zero element in the encoded data;

determining the to-be-decoded data based on the de-quantized data through the quantity of the first element, a quantity of non-zero element among the first element and the position of the non-zero element in the encoded data.

Optionally, the processor 1103 is configured to read the computer program in the memory 1101 and perform the following operation:

receiving Channel Quality Indicator (CQI) sent by the terminal.

Optionally, the processor 1103 is configured to read the computer program in the memory 1101 and perform the following operations:

sending a beamformed channel information reference signal to the terminal, wherein a beam used by the channel information reference signal is determined based on the channel information restored by the network device;

receiving the CQI sent by the terminal, wherein the CQI is calculated by the terminal according to the channel information reference signal.

Optionally, the processor 1103 is configured to read the computer program in the memory 1101 and perform the following operations:

receiving interference-and-noise-related information of a downlink channel sent by the terminal;
calculating CQI based on the interference-and-noise-related information of the downlink channel and the restored channel information.

In FIG. 11, the bus architecture may include any number of interconnected buses and bridges, and connects various circuits including one or more processors represented by the processor 1103 and the memory represented by the memory 1101. The bus architecture can also link together various other circuits such as peripherals, voltage regulators, and power management circuits, which are all well known in the art and therefore will not be described further herein. The bus interface provides the interface. The transceiver 1102 may be a plurality of elements, including a transmitter and a receiver, to allow for communication with various other apparatuses on the transmission medium. The transmission medium includes wireless channels, wired channels, optical cables, and other transmission media. The processor 1103 is responsible for managing the bus architecture and general processing, and the memory 1101 can store data used by the processor 1103 when performing operations.

Optionally, the processor 1103 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

By calling the computer program stored in the memory, the processor is configured to perform any of the methods provided by the embodiments of the present disclosure according to the obtained executable instructions. The processor and the memory can also be physically separated.

It should be noted here that the above-mentioned apparatus provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

An embodiment of the present disclosure also provides a processor-readable storage medium. The processor-readable storage medium stores a computer program. The computer program is used to cause the processor to execute the steps in the foregoing information processing method, and can achieve the same technical effect. The parts and beneficial effects of the embodiments that are the same as the method embodiments will no longer be described in detail.

The processor-readable storage medium may be any available media or data storage device that the processor can access, including but not limited to magnetic storage (such as floppy disks, hard disks, magnetic tapes, Magneto-Optical disks (MO)), optical storage (such as CD, DVD, BD, HVD), and semiconductor memories (such as ROM, EPROM, EEPROM, non-volatile memory (NAND FLASH), Solid State Disk or Solid State Drive (SSD)), etc.

The processing methods of the embodiments of the present disclosure are described below with reference to specific examples.

Embodiment 1: I network models including an encoder and a decoder are deployed on the network side or terminal side

In this embodiment, the terminal side determines a first network model. For example, the UE (i.e., the terminal) downloads from a gNB (i.e., the network device) I network models for inference to implement compressed feedback of CSI. The UE estimates the downlink channel state information $\mathbf{h}_f$ in different frequency domain units based on the received CSI-RS. Each frequency domain unit can be a sub-band, PRB, subcarrier or the like. Let the matrix $H_1 \in \mathbb{C}^{N_c \times N_t}$ composed of the downlink channels corresponding to the first receiving antenna in all frequency domain units be used as the input to the i-th encoder, $N_t$ is the quantity of transmitting antenna ports on the network side and $N_c$ is the quantity of frequency domain units. The output of the encoder is one codeword of length $k_i$. Then the codeword is inputted to one quantizer module so that each element of the codeword is quantized using Q=2 bits. The quantized codeword is then inputted to one de-quantizer module and the corresponding de-quantized information is outputted. Finally, the outputted dequantized information is used as the input to the i-th decoder, and the output of the decoder is the restored downlink channel, as shown in Fig. 12.

The UE uses the restored downlink channel $\mathbf{h}_{f,i}$ to calculate the signal to interference and noise ratio $\gamma$ of each frequency domain unit and the corresponding broadband signal to interference and noise ratio $\gamma_{WB,i}$. Assume that the minimum value of the broadband signal-to-interference-noise ratio which is preset or configured by the gNB to the UE is $\gamma_T$. If the calculation performed by UE reveals that $\gamma_{WB,i} < \gamma_T$, it demonstrates that the i-th model selected by the UE cannot meet the requirement, then the UE selects the (i+1)-th network model, inputs the calculated downlink channel $\mathbf{h}_{f,i}$ to the (i+1)-th network model, and finally obtains the restored downlink channel $\mathbf{h}_{f,i+1}$ outputted by the decoder corresponding to the (i+1)-th network model. The UE calculates the broadband $\gamma_{WB,i+1}$ based on the $\mathbf{h}_{f,i+1}$. If $\gamma_{WB,i+1} \geq \gamma_T$, then the network model meets the requirement, otherwise the UE selects the (i+2)-th network model until the broadband signal to interference and noise ratio calculated according to the selected network model is no less than $\gamma_T$, and

the UE sends the selected optimal network model to the gNB through the uplink channel. If all the broadband signal-to-interference-noise ratios calculated based on the I network models do not meet the requirement, the UE selects one network model corresponding to the largest broadband signal-to-interference-noise ratio for the CSI compressed feedback.

The gNB determines, based on one received codeword information of length $k_i$, the network model selected by the UE, thereby determining the decoder used for restoring the downlink channel; and then the gNB, based on received quantized codeword information sent by the UE, uses the selected decoder to infer an eigenvector $\mathbf{h}_f$ for precoding of downlink data transmission.

Embodiment 2: AI-based Layer 1 CSI compressed feedback

The UE estimates the downlink channel state information $\boldsymbol{H}_f$ in different frequency domain units based on the received CSI-RS, and then performs singular value decomposition on the channel state information in the f-th frequency domain unit to obtain the corresponding eigenvector $\boldsymbol{v}_f$. Each frequency domain unit may be a sub-band, PRB or subcarrier, etc. The matrix $\boldsymbol{U}_l \in \mathbb{C}^{N_c \times N_t}$ composed of the eigenvectors corresponding to the maximum eigenvalue of the downlink channels in all frequency domain units is used as the input to an adaptive encoder. The output of the encoder is one codeword C containing $K_0$ elements, as shown in Fig. 13.

The following shows two methods in which the mask vector is configured by gNB or selected by UE.

Method 1): Assume that the gNB configures for the UE a mask vector $M_1$ with the first K bits being 1 and the last $K_0 - K_1$ bits being 0. The codeword is inputted to the mask vector module, and finally one codeword with a length of $K_1$ is outputted. That is, subjecting the codeword C to the mask vector module would obtain:

$$Z_{\mathrm{masking}} = C \odot M_i$$

When calculating according to the above formula, $Z_{masking}$ is equivalent to setting the last $K_0 - K_1$ element positions in the codeword C to 0, and only retaining the content of the first $K_1$ elements in the codeword C, that is, the length of the truncated information is $K_1$; UE then inputs the truncated codeword information to a quantization module. The quantizer module uses Q=2 bits to quantize each element.

For example, the quantizer module quantizes the i-th element $a_i$ to A, where B< $a_i \leq$ A, and the value of A is represented by the value corresponding to two bits. The UE reports the quantized binary bit stream information to the gNB. The gNB inputs the bit stream information to a de-quantizer module to obtain the quantized values of the $K_1$ elements, and then using the quantized values of the $K_1$ elements and $K_0 - K_1$ elements that are all 0 and added after the $K_1$ elements to obtain the codeword C'. Finally, the gNB inputs the codeword C' to the adaptive decoder, and uses the inference of the adaptive decoder network model to obtain the restored eigenvector $\boldsymbol{v}_{f,i}$, which is used for precoding of downlink data transmission.

Method 2): Assume that the aforementioned mask vector is selected and determined by the UE, and the method for the UE to select the mask vector is the same as the method for the UE to select the network model. The UE needs to indicate by using $\lceil \log_2(K_0) \rceil$ bits that the quantity of the first elements in the mask vector which are all 1 is $K_1$, and send the indication information to the gNB through the uplink channel. The gNB determines the mask vector used by the UE based on this indication information, and can also determine that the first $K_1$ elements of the output information of the mask vector populating module is the output information of the de-quantizer module, and the last $K_0 - K_1$ elements of the output information of the mask vector populating module is all 0. The other processing procedures of UE and gNB are the same as above.

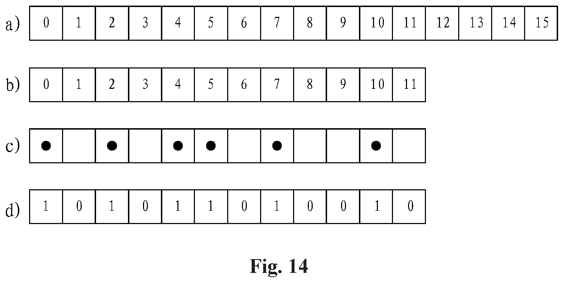

The UE may also report the quantity of non-zero elements and the position information of the non-zero element to indicate the reported elements. For example: as shown in a) of Fig. 14, the quantity $K_0$ of elements in the codeword C is 16. The UE reports only $K_2 = 6$ non-zero elements among the aforementioned $K_1 = 12$ elements through mask vector truncation, and indicates the positions of the 6 non-zero elements through one bitmap. As shown in b) of Fig. 14, only the first 12 elements, namely, elements numbered 0~11, are selected. However, the UE only reports 6 elements. The positions of these 6 elements are shown in c) of Fig. 14, in which the positions containing a black dot indicate the elements that need to be reported. The UE indicates the quantity of the reported elements through $\lceil \log_2(K_1) \rceil = 4$ bits. The UE also indicates through one bitmap as shown in d) of Fig. 14. The bit in the bitmap that has a value of 1 indicates a reported element, and the bit in the bitmap that has a value of 0 indicates an element which is not reported.

The gNB determines the quantity of non-zero elements based on the non-zero element quantity indication information, and then determines the position of the non-zero element based on the non-zero element position indication information. The gNB determines the quantized value based on the quantity of non-zero elements, and uses the quantized value as the input to the mask vector populating module. The gNB determines that in the output information of the mask vector populating module, the reported non-zero element positions are occupied by the quantized value and all positions other than the reported non-zero element positions are populated with 0.

Embodiment 3: AI-based L>1 layer CSI compressed feedback

Assume that the UE has R=4 antennas to receive data. The UE estimates the downlink channel state information $H_f$ in different frequency domain units based on the received CSI-RS, and then performs singular value decomposition on the channel state information of the f-th frequency domain unit to obtain the corresponding eigenvector $v_f$. The eigenvectors corresponding to the L=4 eigenvalues of downlink channels in all frequency domain units form 4 matrices $U_l \in \mathbb{C}^{N_c \times N_t}$, $l \in \{1, ..., L\}$ and serve as inputs to four adaptive encoders respectively, which can output four codewords C. Assume that the lengths of the four codewords are equal, namely, $K_{0,1} = K_{0,2} = K_{0,3} = K_{0,4}$ = 16. The gNB configures a maximum quantity of reported elements in each codeword to be $\overline{K}$ = 12. Based on the estimated downlink channel, the UE determines the quantity of report elements of the four codewords as 10, 10, 8 and 6 respectively, and then quantizes the first 10, 10, 8 and 6 elements of the four codewords respectively and reports them to the gNB.

The UE also indicates the quantities of reported elements of layers 1 to 4 through four sets of $\lceil \log_2(\overline{K}) \rceil = 4$ bits, respectively. Optionally, the UE indicates the quantity of reported elements of the layer 1 and the layer 2 through one set of $\lceil \log_2(\overline{K}) \rceil = 4$ bits, and then indicates the quantity of reported elements of the layer 3 and the quantity of reported elements of the layer 4 through two sets of $\lceil \log_2(\overline{K}) \rceil = 4$ bits, respectively. The gNB determines the reported elements in each codeword according to the element quantity indication information reported by the UE.

This embodiment provides a network model or mask vector selection method, which can select an appropriate network model according to the channel differences of different users, to reduce the feedback overhead of the terminal. Moreover, embodiments of the present disclosure also provide the network model input information form of L layer compressed feedback, and the method of determining the reported elements of L codewords and the quantity and position of the reported elements. It can also realize the artificial intelligence-based effective compressed feedback of the L layer channel information.

Those skilled in the art will appreciate that embodiments of the present disclosure may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product embodied on one or more computer-usable storage media (including, but not limited to, magnetic disk storage, optical storage, and the like) including computer-usable program codes.

The present disclosure has been described with reference to flow diagrams and/or block diagrams of methods, devices (systems), and computer program products according to embodiments of the present disclosure. It will be understood that each flow and/or block of the flow diagrams and/or block diagrams, and combinations of flows and/or blocks in the flow diagrams and/or block diagrams, can be implemented by computer executable instructions. These computer executable instructions may be provided to a processor of a general purpose computer, special purpose computer, embedded processor, or other programmable data processing device to produce a machine, such that the instructions, which are executed via the processor of the computer or other programmable data processing device, create means for implementing the functions specified in the flow diagram flow or flows and/or block diagram block or blocks.

These processor executable instructions may also be stored in a processor-readable storage that can direct a computer or other programmable data processing device to function in a particular manner, such that the instructions stored in the processor-readable storage produce an article of manufacture including instruction means which implement the function specified in the flow diagram flow or flows and/or block diagram block or blocks.

The processor executable instructions may also be loaded onto a computer or other programmable data processing device to cause a series of operational steps to be performed on the computer or other programmable device to produce a computer-implemented process such that the instructions which are executed on the computer or other programmable device provide steps for implementing the functions specified in the flow diagram flow or flows and/or block diagram block or blocks.

In addition, it should be pointed out that in the apparatus and method of the present disclosure, obviously, each component or each step can be decomposed and/or recombined. These decompositions and/or recombinations should be considered as equivalents to the present disclosure. Furthermore, the steps for executing the above series of processes can naturally be executed in chronological order in the order described, but they do not necessarily need to be executed in the chronological order, and some steps may be executed in parallel or independently of each other. For those of ordinary skill in the art, it can be understood that all or any steps or components of the methods and apparatuses of the present disclosure can be implemented in any computing device (including processor, storage medium, etc.) or a network of computing devices in the form of hardware, firmware, software or their combination, which can be achieved by those of ordinary skill in the art using their basic programming skills after reading the description of the present disclosure.

It should be understood that the division of each module above is only a division of logical functions. In actual implementation, it can be fully or partially integrated into one physical entity, or it can also be physically separated. These modules can all be implemented in the form of software called by processing elements; they can also all be implemented in the form of hardware; or some modules can be implemented in the form of software called by processing elements, and some modules can be implemented in the form of hardware. For example, a certain module can be a separate processing element, or it can be integrated and implemented in a chip of the above-mentioned device. In addition, it can also be stored in the memory of the above-mentioned apparatus in the form of program codes, and called by a processing element of the above-mentioned apparatus to execute the functions of the modules identified above. The implementation of other modules is similar. In addition, all or part of these modules can be integrated together or implemented independently. The processing element described here may be an integrated circuit with signal processing capabilities. During the implementation process, each step of the above method or each of the above modules can be accomplished by integrated logic circuits in the form of hardware or instructions in the form of software in the processor element.

For example, each module, unit, sub-unit or sub-module may be one or more integrated circuits configured to implement the above method, such as: one or more Application Specific Integrated Circuits (ASICs), or, one or more microprocessors (Digital Signal Processor, DSP), or one or more Field Programmable Gate Arrays (FPGAs). For another example, when one of the above modules is implemented in the form of a processing element calling program codes, the processing element can be a general-purpose processor, such as a Central Processing Unit (CPU) or other processors that can call the program codes. For another example, these modules can be integrated together and implemented in the form of a System-On-A-Chip (SOC).

Terms "first", "second" and the like in the specification and claims of this disclosure are adopted not to describe a specific sequence or order but to distinguish similar objects. It should be understood that data used like this may be interchanged under a proper condition for implementation of the embodiments of the disclosure described here in a sequence apart from those shown or described here. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic in the process, the method, the product or the equipment. In addition, the use of "and/or" in the specification and claims indicates at least one of the connected objects, for example, A and/or B and/or C indicates the inclusion of 7 situations, namely, A alone, B alone, C alone, both A and B exist, both B and C exist, both A and C exist, and A, B, and C all exist. Similarly, the use of "at least one of A and B" in the specification and claims should be understood to mean "A alone, B alone, or both A and B exist."

Obviously, those skilled in the art can make various changes and modifications to the present disclosure without departing from the spirit and scope of the disclosure. In this way, if these modifications and variations of the present disclosure fall within the scope of the claims of the present disclosure and equivalent thereof, the present disclosure is also intended to include these modifications and variations.

## Claims

1. An information processing method, comprising:

   receiving, by a terminal, a downlink signal sent by a network device;
   determining, by the terminal, a first network model according to the downlink signal; wherein the first network model is at least one of I network models that are pre-deployed or downloaded from the network device side, and I is a positive integer;
   encoding, by the terminal, first channel information through the first network model, to obtain to-be-transmitted encoded data; and
   processing, by the terminal, the encoded data and then sending, by the terminal, data resulting from the processing of the encoded data to the network device.

2. The information processing method according to claim 1, wherein the downlink signal is a downlink reference signal; and the determining, by the terminal, the first network model according to the downlink signal comprises:

   determining, by the terminal, the first channel information according to the downlink reference signal; and
   determining, by the terminal, the first network model according to the first channel information.

3. The information processing method according to claim 2, wherein after the determining, by the terminal, the first network model according to the first channel information, the method further comprises: sending, by the terminal, a first uplink signal to the network device, wherein the first uplink signal carries first indication information used for indicating the first network model.

4. The information processing method according to claim 3, wherein the first channel information comprises L pieces of channel information, and L is a positive integer; wherein,

> in case that different pieces of channel information are encoded and/or decoded through different network models, the first indication information comprises N1 bits, and the N1 bits are used for indicating the network models corresponding to the different pieces of channel information respectively, wherein $N1 = \lceil \log_2(C_I^L) \rceil$;
> in case that different pieces of channel information are encoded and/or decoded through a same network model, the first indication information comprises N2 bits, and the N2 bits are used for indicating the same network model, wherein $N2 = \lceil \log_2(I) \rceil$.

5. The information processing method according to claim 2, wherein the determining, by the terminal, the first network model according to the first channel information comprises:

> performing, by the terminal, encoding and/or decoding based on the first channel information through the I network models respectively, to obtain second channel information corresponding to each network model;
> calculating, by the terminal, a target parameter corresponding to each network model based on the first channel information and the second channel information corresponding to each network model;
> in case that the I network models comprise M ≥ 1 network model whose target parameter meets a preset condition, selecting, by the terminal, from the M network models a network model through which the encoding yields the encoded data having a smallest quantity of elements, and determining, by the terminal, the selected network model as the first network model;
> in case that the I network models comprise M=0 network model whose target parameter meets the preset condition, selecting, by the terminal, from the I network models a network model through which the encoding yields the encoded data having a largest quantity of elements, and determining, by the terminal, the selected network model as the first network model.

6. The information processing method according to claim 5, wherein the calculating, by the terminal, the target parameter corresponding to each network model based on the first channel information and the second channel information corresponding to each network model comprises:

> calculating, by the terminal through a target criterion, the target parameter corresponding to each network model based on the first channel information and the second channel information corresponding to each network model;
> wherein the target criterion is a cosine similarity criterion, or the target criterion is a normalized mean square error criterion, or the target criterion is a broadband signal to interference and noise ratio criterion.

7. The information processing method according to claim 1, wherein the downlink signal carries second indication information used for indicating the first network model, and before the receiving, by the terminal, the downlink signal sent by the network device, the method further comprises: sending, by the terminal, a second uplink signal to the network device, wherein the second uplink signal is used by the network device to determine the first network model.

8. The information processing method according to claim 7, wherein the second uplink signal is an uplink reference signal; or the second uplink signal carries a Precoding Matrix Indicator (PMI).

9. The information processing method according to claim 1, wherein the first channel information comprises L pieces of channel information, and L is a positive integer; wherein an *l*-th channel information in the L pieces of channel information comprises one of the followings:

> downlink channel information $H_l$ corresponding to an *l-th* receiving antenna in a first frequency domain unit, wherein, $H_l \in \mathbb{C}^{N_c \times N_t}$, $l \in \{1, ..., P1\}$, $N_t$ is a quantity of transmitting antenna ports of the network device, $N_c$ is a quantity of frequency domain units in the first frequency domain unit, $P1$ is a quantity of receiving antennas of the terminal;
> a received signal $Y_l$ of a downlink reference signal passing through a channel that is received by the *l-th* receiving antenna in the first frequency domain unit, wherein $Y_l \in \mathbb{C}^{N_c \times N_t}$, $l \in \{1, ..., P1\}$;
> an *l*-th eigenvector $U_l$ obtained by a singular value decomposition of downlink channel information in the first frequency domain unit, wherein

$U_l \in \mathbb{C}^{N_c \times N_t}$, $l \in \{1, ..., P2\}$, $P2$ is a quantity of eigenvectors;

a precoding vector $V_l$ of an $l$-th data stream in the first frequency domain unit, wherein

$V_l \in \mathbb{C}^{N_c \times N_t}$, $l \in \{1, ..., P3\}$, $P3$ is a quantity of data streams;

a combination of precoding vectors of R data streams in the first frequency domain unit, wherein L= 1;

a combination of received signals of a downlink reference signal passing through channels that correspond to R receiving antennas respectively in the first frequency domain unit, wherein L=1;

a combination of pieces of downlink channel information corresponding to the R receiving antennas respectively in the first frequency domain unit, wherein L=1;

a combination of R eigenvectors obtained by a singular value decomposition of the downlink channel information in the first frequency domain unit, wherein L= 1;

a combination of precoding vectors of R data streams in the first frequency domain unit and (vl-R) zero vectors $0_j$, wherein L=1,

$0_j \in \mathbb{C}^{N_c \times N_t}$, $j \in \{R + 1, ..., v1\}$, v1 is a maximum quantity of data streams that the terminal is capable of transmitting;

a combination of the pieces of downlink channel information corresponding to the R receiving antennas respectively in the first frequency domain unit and (v2-R) zero vectors, wherein L=1, v2 is a maximum quantity of receiving antennas of the terminal;

a combination of the received signals of the downlink reference signal passing through the channels that correspond to the R receiving antennas respectively in the first frequency domain unit and the (v2-R) zero vectors, wherein L=1;

a combination of the R eigenvectors obtained by the singular value decomposition of the downlink channel information in the first frequency domain unit and the (vl-R) zero vectors, wherein L=1;

channel information $\tilde{H}_l$ obtained by a two-dimensional Fourier transformation of the channel information in the first frequency domain unit,

wherein $\tilde{H}_l \in \mathbb{C}^{N_c \times N_t}$, $l \in \{1, ..., P2\}$;

partial channel information $\hat{H}_l$ retained after truncating channel information in the frequency domain of the $\tilde{H}_l$, wherein, $\hat{H}_l \in \mathbb{C}^{N_c \times N_t}$, $N_c$

$< N_c$;

wherein the first frequency domain unit is all frequency domain units or one frequency domain unit.

10. The information processing method according to claim 9, wherein the frequency domain unit is one subcarrier, or the frequency domain unit is one Physical Resource Block (PRB), or the frequency domain unit is one sub-band comprising multiple PRBs.

11. The information processing method according to claim 1, wherein the processing, by the terminal, the encoded data and then sending, by the terminal, data resulting from the processing of the encoded data to the network device comprises:
   performing, by the terminal, quantization processing on a first element in the encoded data, and transmitting, by the terminal, quantized data to the network device, wherein the first element is part or all of elements in the encoded data.

12. The information processing method according to claim 11, wherein the first element comprises one of the followings:

   $K_1$ non-zero element in the encoded data, wherein $K_1$ is a positive integer, $K_1 \leq K_0$, $K_0$ is a quantity of all elements in the encoded data;
   $K_1$ elements in the encoded data that are determined based on a mask vector;
   consecutive $K_1$ elements starting from a first position in the encoded data.

13. The information processing method according to claim 12, wherein the first channel information comprises L pieces of channel information, L≥1, and the method further comprises one of the followings:

   when L≥1, sending, by the terminal, third indication information to the network device, wherein one piece of channel information corresponds to one piece of third indication information, and the third indication information is used for indicating a quantity of the first element and/or a position of the first element in the encoded data;
   when L>1, in case that the quantity of the first element and/or the position of the first element in the encoded data resulting from encoding a first partial channel information is the same, sending, by the terminal, common fourth indication information for the first partial channel information to the network device, wherein the fourth indication information is used for indicating the quantity of the first element and/or the position of the first element in the encoded data; the first partial channel information is part or all of the L pieces of channel information;

when L>1, sending, by the terminal, fifth indication information indicating for the L pieces of channel information jointly to the network device, wherein the fifth indication information is used for indicating the quantity of the first element and/or the position of the first element in the encoded data resulting from encoding each piece of channel information; or, the fifth indication information is used for indicating a total quantity of the first elements in L encoded data resulting from encoding the L pieces of channel information and/or positions of the first elements in the encoded data.

14. The information processing method according to claim 13, wherein in case that the first element comprises the $K_1$ non-zero element in the encoded data,

in case that $K_1<K_0$, the third indication information or the fourth indication information is used for indicating the quantity $K_1$ of the non-zero element and a position of the $K_1$ non-zero element in the encoded data;

in case that $K_1=K_0$, the third indication information or the fourth indication information is used for indicating the quantity $K_1$ of the non-zero element.

15. The information processing method according to claim 13, wherein the third indication information or the fourth indication information comprises N3 bits, the N3 bits are used for indicating the quantity $K_1$ of

the first element, wherein N3= $\lceil \log_2(K_0) \rceil$.

16. The information processing method according to claim 13, wherein in case that the first element comprises the $K_1$ elements in the encoded data that are determined based on a mask vector, or consecutive $K_1$ elements starting from the first position in the encoded data,

the third indication information or the fourth indication information comprises N4 bits, the N4 bits are used for indicating a quantity $K_2$ of non-zero element in the $K_1$ elements, and the third indication information or the fourth indication information is also used for indicating a position of the $K_2$ non-zero element in the encoded data, wherein N4= $\lceil \log_2(K_1) \rceil$, $K_2 \leq K_1$.

17. The information processing method according to claim 13, wherein the fifth indication information comprises N5 bits, and the N5 bits are used for indicating the quantity of the first element in the encoded data resulting from encoding each piece of channel information; wherein N5= $\lceil \log_2(\overline{K}) \rceil$, $\overline{K}$ is a maximum quantity of reported elements in each encoded data;

or,

the fifth indication information comprises N6 bits, and the N6 bits are used for indicating a total quantity of the first elements in the L encoded data; wherein N6=

$\lceil \log_2(\overline{K}_{tot}) \rceil$, $\overline{K}_{tot}$ is a maximum total quantity of reported elements in the L encoded data.

18. The information processing method according to claim 1, wherein after the determining, by the terminal, the first network model according to the downlink signal, the method further comprises:

obtaining, by the terminal, restored second channel information through the first network model based on data resulting from the processing of the encoded data;

calculating, by the terminal, a Channel Quality Indicator (CQI) based on the second channel information; and

sending, by the terminal, the CQI to the network device.

19. The information processing method according to claim 1, wherein after the determining, by the terminal, the first network model according to the downlink signal, the method further comprises:

receiving, by the terminal, a beamformed channel information reference signal sent by the network device, wherein a beam used by the channel information reference signal is determined based on channel information restored by the network device;

determining, by the terminal, valid channel information based on the channel information reference signal;

calculating, by the terminal, a CQI based on the valid channel information;

sending, by the terminal, the CQI to the network device.

20. The information processing method according to claim 1, further comprising:
sending, by the terminal, interference-and-noise-related information of a downlink channel to the network device, wherein the interference-and-noise-related information of the downlink channel is used by the network device to calculate a CQI.

21. An information processing method, comprising:

sending, by a network device, a downlink signal to a terminal, wherein the downlink signal is used by the terminal to determine a first network model, and the first network model is at least one of I pre-deployed network models, where I is a positive integer;

receiving, by the network device, data resulting from the terminal's processing of encoded data, wherein the encoded data is obtained by the terminal after encoding first channel information according to the first network model;

determining, by the network device, to-be-decoded data based on the data resulting from the terminal's processing of the encoded data;

decoding, by the network device, the to-be-decoded data according to the first network model to obtain restored channel information.

22. The information processing method according to claim 21, wherein the downlink signal is a downlink reference signal, and before the decoding, by the network device, the to-be-decoded data according to the first network model to obtain the restored channel information, the method further comprises:

receiving, by the network device, a first uplink signal sent by the terminal;

determining, by the network device, the first network model based on the first uplink signal.

23. The information processing method according to claim 21, wherein the downlink signal carries second indication information used for indicating the first network model, and before the sending, by the network device, the downlink signal to the terminal, the method further comprises:

receiving, by the network device, a second uplink signal sent by the terminal;

determining, by the network device, third channel information based on the second uplink signal;

determining, by the network device, the first network model based on the third channel information.

24. The information processing method according to claim 23, wherein the second uplink signal is an uplink reference signal; or the second uplink signal carries a Precoding Matrix Indicator (PMI).

25. The information processing method according to claim 23, wherein the determining, by the network device, the first network model based on the third channel information comprises:

performing, by the network device, encoding and/or decoding based on the third channel information through the I network models respectively to obtain fourth channel information corresponding to each network model;

calculating, by the network device, a target parameter corresponding to each network model based on the third channel information and the fourth channel information corresponding to each network model;

in case that the I network models comprise M ≥ 1 network model whose target parameter meets a preset condition, selecting, by the network device, from the M network models a network model through which the encoding yields the encoded data having a smallest quantity of elements, and determining, by the network device, the selected network model as the first network model;

in case that the I network models comprise M=0 network model whose target parameter meets the preset condition, selecting, by the network device, from the I network models a network model through which the encoding yields the encoded data having a largest quantity of elements, and determining, by the network device, the selected network model as the first network model.

26. The information processing method according to claim 25, wherein the calculating, by the network device, the target parameter corresponding to each network model based on the third channel information and the fourth channel information corresponding to each network model comprises:

calculating, by the network device through a target criterion, the target parameter corresponding to each network model based on the third channel information and the fourth channel information corresponding to each network model;

wherein the target criterion is a cosine similarity criterion, or the target criterion is a normalized mean square error criterion, or the target criterion is a broadband signal to interference and noise ratio criterion.

27. The information processing method according to claim 23, wherein the first channel information comprises L pieces of channel information, and L is a positive integer; wherein,

in case that different pieces of channel information are encoded and/or decoded through different network models, the second indication information comprises N1 bits, and the N1 bits are used for indicating the network models corresponding to the different pieces of channel information respectively, wherein

$$N1 = \left\lceil \log_2(C_I^L) \right\rceil;$$

in case that different pieces of channel information are encoded and/or decoded through a same network model, the second indication information comprises N2 bits, and the N2 bits are used for indicating the same network model, wherein N2 = $\lceil \log_2(I) \rceil$.

28. The information processing method according to claim 21, wherein the first channel information comprises L pieces of channel information, and L≥1, and before the determining, by the network device, the to-be-decoded data based on the data resulting from the terminal's processing of the encoded data, the method also comprises one of the followings:

when L≥1, receiving, by the network device, third indication information sent by the terminal, wherein one piece of channel information corresponds to one piece of third indication information, and the third indication information is used for indicating a quantity of first element and/or a position of the first element in the encoded data, wherein the first element is part or all of elements in the encoded data;

when L>1, receiving, by the network device, common fourth indication information sent by the terminal for first partial channel information; wherein the first partial channel information is part or all of the L pieces of channel information, and the quantity of the first element and/or the position of the first element in the encoded data resulting from encoding the first partial channel information is the same, the fourth indication information is used for indicating the quantity of the first element and/or the position of the first element in the encoded data;

when L> 1, receiving, by the network device, fifth indication information sent by the terminal that indicates for the L pieces of channel information jointly, wherein the fifth indication information is used for indicating the quantity of the first element and/or the position of the first element in the encoded data resulting from encoding each piece of channel information; or, the fifth indication information is used for indicating a total quantity of the first elements in L encoded data resulting from encoding the L pieces of channel information and/or positions of the first elements in the encoded data.

29. The information processing method according to claim 28, wherein the first element comprises one of the followings:

$K_1$ non-zero element in the encoded data, wherein $K_1$ is a positive integer, $K_1 \leq K_0$, $K_0$ is a quantity of all elements in the encoded data;

$K_1$ elements in the encoded data that are determined based on a mask vector;
consecutive $K_1$ elements starting from a first position in the encoded data.

30. The information processing method according to claim 28 or 29, wherein the determining, by the network device, the to-be-decoded data based on the data resulting from the terminal's processing of the encoded data comprises:

performing, by the network device, dequantization processing on the data resulting from the terminal's processing of the encoded data to obtain de-quantized data;
determining, by the network device, the to-be-decoded data based on the de-quantized data through the third indication information, or the fourth indication information, or the fifth indication information.

31. The information processing method according to claim 30, wherein the determining, by the network device, the to-be-decoded data based on the de-quantized data through the third indication information, or the fourth indication information, or the fifth indication information comprises one of the followings:

determining, by the network device, the to-be-decoded data based on the de-quantized data through a mask vector;
determining, by the network device, the to-be-decoded data based on the de-quantized data through the quantity of the first element;
determining, by the network device, the to-be-decoded data based on the de-quantized data through the position of the first element in the encoded data;
determining, by the network device, the to-be-decoded data based on the de-quantized data through a quantity of non-zero element and a position of the non-zero element in the encoded data;
determining, by the network device, the to-be-decoded data based on the de-quantized data through the quantity of the first element, a quantity of non-zero element among the first element and the position of the non-zero element in the encoded data.

32. The information processing method according to claim 21, further comprising:
receiving, by the network device, Channel Quality Indicator (CQI) sent by the terminal.

33. The information processing method according to claim 21, further comprising:

sending, by the network device, a beamformed channel information reference signal to the terminal, wherein a beam used by the channel information reference signal is determined based on the channel information restored by the network device;

receiving, by the network device, the CQI sent by the terminal, wherein the CQI is calculated by the terminal according to the channel information reference signal.

34. The information processing method according to claim 21, further comprising:

receiving, by the network device, interference-and-noise-related information of a downlink channel sent by the terminal;

calculating, by the network device, CQI based on the interference-and-noise-related information of the downlink channel and the restored channel information.

35. An information processing apparatus, comprising a memory, a transceiver, and a processor;

wherein the memory is configured to store a computer program; the transceiver is configured to send and receive data under the control of the processor; the processor is configured to read the computer program in the memory and perform the following operations:

receiving a downlink signal sent by a network device;

determining a first network model according to the downlink signal; wherein the first network model is at least one of I network models that are pre-deployed or downloaded from the network device side, and I is a positive integer;

encoding first channel information through the first network model, to obtain to-be-transmitted encoded data; and

processing the encoded data and then sending data resulting from the processing of the encoded data to the network device.

36. The information processing apparatus according to claim 35, wherein the downlink signal is a downlink reference signal; the processor is configured to read the computer program in the memory and perform the following operations:

determining the first channel information according to the downlink reference signal; and

determining the first network model according to the first channel information.

37. The information processing apparatus according to claim 36, wherein the processor is configured to read the computer program in the memory and perform the following operation:

sending a first uplink signal to the network device, wherein the first uplink signal carries first indication information used for indicating the first network model.

38. The information processing apparatus according to claim 37, wherein the first channel information comprises L pieces of channel information, and L is a positive integer; wherein,

in case that different pieces of channel information are encoded and/or decoded through different network models, the first indication information comprises N1 bits, and the N1 bits are used for indicating the network models corresponding to the different pieces of channel information respectively, wherein $N1 = \left\lceil \log_2(C_I^L) \right\rceil$;

in case that different pieces of channel information are encoded and/or decoded through a same network model, the first indication information comprises N2 bits, and the N2 bits are used for indicating the same network model, wherein $N2 = \left\lceil \log_2(I) \right\rceil$.

39. The information processing apparatus according to claim 36, wherein the processor is configured to read the computer program in the memory and perform the following operations:

performing encoding and/or decoding based on the first channel information through the I network models respectively, to obtain second channel information corresponding to each network model;

calculating a target parameter corresponding to each network model based on the first channel information and the second channel information corresponding to each network model;

in case that the I network models comprise $M \geq 1$ network model whose target parameter meets a preset condition, selecting from the M network models a network model through which the encoding yields the encoded data having a smallest quantity of elements, and determining the selected network model as the first network model;

in case that the I network models comprise M=0 network model whose target parameter meets the preset condition, selecting from the I network models a network model through which the encoding yields the encoded data having a largest quantity of elements, and determining the selected network model as the first network model.

**40.** The information processing apparatus according to claim 39, wherein the processor is configured to read the computer program in the memory and perform the following operation:

calculating, through a target criterion, the target parameter corresponding to each network model based on the first channel information and the second channel information corresponding to each network model;

wherein the target criterion is a cosine similarity criterion, or the target criterion is a normalized mean square error criterion, or the target criterion is a broadband signal to interference and noise ratio criterion.

**41.** The information processing apparatus according to claim 35, wherein the downlink signal carries second indication information used for indicating the first network model; the processor is configured to read the computer program in the memory and perform the following operation:

sending a second uplink signal to the network device, wherein the second uplink signal is used by the network device to determine the first network model.

**42.** The information processing apparatus according to claim 41, wherein the second uplink signal is an uplink reference signal; or the second uplink signal carries a Precoding Matrix Indicator (PMI).

**43.** The information processing apparatus according to claim 35, wherein the first channel information comprises L pieces of channel information, and L is a positive integer; wherein an $l$-th channel information in the L pieces of channel information comprises one of the followings:

downlink channel information $H_l$ corresponding to an $l$-th receiving antenna in a first frequency domain unit, wherein, $H_l \in \mathbb{C}^{N_c \times N_t}$ , $l \in \{1, ..., P1\}$, $N_t$ is a quantity of transmitting antenna ports of the network device, $N_c$ is a quantity of frequency domain units in the first frequency domain unit, $P1$ is a quantity of receiving antennas of the terminal;

a received signal $Y_l$ of a downlink reference signal passing through a channel that is received by the $l$-th receiving antenna in the first frequency domain unit, wherein $Y_l \in \mathbb{C}^{N_c \times N_t}$ , $l \in \{1, ..., P1\}$;

an $l$-th eigenvector $U_l$ obtained by a singular value decomposition of downlink channel information in the first frequency domain unit, wherein

$U_l \in \mathbb{C}^{N_c \times N_t}$ , $l \in \{1, ..., P2\}$, $P2$ is a quantity of eigenvectors;

a precoding vector $V_l$ of an $l$-th data stream in the first frequency domain unit, wherein $V_l \in \mathbb{C}^{N_c \times N_t}$ , $l \in \{1, ..., P3\}$, $P3$ is a quantity of data streams;

a combination of precoding vectors of R data streams in the first frequency domain unit, wherein L= 1;

a combination of received signals of a downlink reference signal passing through channels that correspond to R receiving antennas respectively in the first frequency domain unit, wherein L=1;

a combination of pieces of downlink channel information corresponding to the R receiving antennas respectively in the first frequency domain unit, wherein L=1;

a combination of R eigenvectors obtained by a singular value decomposition of the downlink channel information in the first frequency domain unit, wherein L= 1;

a combination of precoding vectors of R data streams in the first frequency domain unit and (vl-R) zero vectors $0_j$, wherein L=1, $0_j \in \mathbb{C}^{N_c \times N_t}$ , $j \in \{R + 1, ..., v1\}$, v1 is a maximum quantity of data streams that the terminal is capable of transmitting;

a combination of the pieces of downlink channel information corresponding to the R receiving antennas respectively in the first frequency domain unit and (v2-R) zero vectors, wherein L=1, v2 is a maximum quantity of receiving antennas of the terminal;

a combination of the received signals of the downlink reference signal passing through the channels that correspond to the R receiving antennas respectively in the first frequency domain unit and the (v2-R) zero vectors, wherein L=1;

a combination of the R eigenvectors obtained by the singular value decomposition of the downlink channel information in the first frequency domain unit and the (vl-R) zero vectors, wherein L=1;

channel information $\breve{H}_l$ obtained by a two-dimensional Fourier transformation of the channel information in the first frequency domain unit, wherein $\breve{H}_l \in \mathbb{C}^{N_c \times N_t}$ , $l \in \{1, ..., P2\}$;

partial channel information $\hat{H}_l$ retained after truncating channel information in the frequency domain of the $\breve{H}_l$ , wherein, $\hat{H}_l \in \mathbb{C}^{N_c \times N_t}$ , $N_c < N_c$;

wherein the first frequency domain unit is all frequency domain units or one frequency domain unit.

44. The information processing apparatus according to claim 43, wherein the frequency domain unit is one subcarrier, or the frequency domain unit is one Physical Resource Block (PRB), or the frequency domain unit is one sub-band comprising multiple PRBs.

45. The information processing apparatus according to claim 35, wherein the processor is configured to read the computer program in the memory and perform the following operations:
performing quantization processing on a first element in the encoded data, and transmitting quantized data to the network device, wherein the first element is part or all of elements in the encoded data.

46. The information processing apparatus according to claim 45, wherein the first element comprises one of the followings:

$K_1$ non-zero element in the encoded data, wherein $K_1$ is a positive integer, $K_1 \leq K_0$, $K_0$ is a quantity of all elements in the encoded data;
$K_1$ elements in the encoded data that are determined based on a mask vector;
consecutive $K_1$ elements starting from a first position in the encoded data.

47. The information processing apparatus according to claim 46, wherein the first channel information comprises L pieces of channel information, and L≥1; and the processor is configured to read the computer program in the memory and perform one of the following operations:

when L≥1, sending third indication information to the network device, wherein one piece of channel information corresponds to one piece of third indication information, and the third indication information is used for indicating a quantity of the first element and/or a position of the first element in the encoded data;
when L>1, in case that the quantity of the first element and/or the position of the first element in the encoded data resulting from encoding a first partial channel information is the same, sending common fourth indication information for the first partial channel information to the network device, wherein the fourth indication information is used for indicating the quantity of the first element and/or the position of the first element in the encoded data; the first partial channel information is part or all of the L pieces of channel information;
when L>1, sending fifth indication information indicating for the L pieces of channel information jointly to the network device, wherein the fifth indication information is used for indicating the quantity of the first element and/or the position of the first element in the encoded data resulting from encoding each piece of channel information; or, the fifth indication information is used for indicating a total quantity of the first elements in L encoded data resulting from encoding the L pieces of channel information and/or positions of the first elements in the encoded data.

48. The information processing apparatus according to claim 47, wherein in case that the first element comprises the $K_1$ non-zero element in the encoded data:

in case that $K_1 < K_0$, the third indication information or the fourth indication information is used for indicating the quantity $K_1$ of the non-zero element and a position of the $K_1$ non-zero element in the encoded data;
in case that $K_1 = K_0$, the third indication information or the fourth indication information is used for indicating the quantity $K_1$ of the non-zero element.

49. The information processing apparatus according to claim 47, wherein the third indication information or the fourth indication information comprises N3 bits, the N3 bits are used for indicating the quantity $K_1$ of the first element, wherein N3= $\lceil \log_2(K_0) \rceil$ .

50. The information processing apparatus according to claim 47, wherein in case that the first element comprises the $K_1$ elements in the encoded data that are determined based on a mask vector, or consecutive $K_1$ elements starting from the first position in the encoded data, the third indication information or the fourth indication information comprises N4 bits, the N4 bits are used for indicating a quantity $K_2$ of non-zero element in the $K_1$ elements, and the third indication information or the fourth indication information is also used for indicating a position of the $K_2$ non-zero element in the encoded data, wherein N4= $\lceil \log_2(K_1) \rceil$ , $K_2 \leq K_1$.

51. The information processing apparatus according to claim 47, wherein the fifth indication information comprises N5 bits, and the N5 bits are used for indicating the quantity of the first element in the encoded data resulting from encoding each piece of channel information; wherein N5= $\lceil \log_2(\overline{K}) \rceil$ , $\overline{K}$ is a maximum quantity of reported elements in each encoded data;

or,

the fifth indication information comprises N6 bits, and the N6 bits are used for indicating a total quantity of the first elements in the L encoded data; wherein

$N6 = \lceil \log_2(\overline{K}_{tot}) \rceil$, $\overline{K}_{tot}$ is a maximum total quantity of reported elements in the L encoded data.

52. The information processing apparatus according to claim 35, wherein the processor is configured to read the computer program in the memory and perform the following operations:

obtaining restored second channel information through the first network model based on data resulting from the processing of the encoded data;

calculating a Channel Quality Indicator (CQI) based on the second channel information; and sending the CQI to the network device.

53. The information processing apparatus according to claim 35, wherein the processor is configured to read the computer program in the memory and perform the following operations:

receiving a beamformed channel information reference signal sent by the network device, wherein a beam used by the channel information reference signal is determined based on channel information restored by the network device;

determining valid channel information based on the channel information reference signal;

calculating a CQI based on the valid channel information;

sending the CQI to the network device.

54. The information processing apparatus according to claim 35, wherein the processor is configured to read the computer program in the memory and perform the following operation:

sending interference-and-noise-related information of a downlink channel to the network device, wherein the interference-and-noise-related information of the downlink channel is used by the network device to calculate a CQI.

55. A terminal, comprising:

a first receiving unit, configured to receive a downlink signal sent by a network device;

a first processing unit, configured to determine a first network model according to the downlink signal, wherein the first network model is at least one of I network models that are pre-deployed or downloaded from the network device side, and I is a positive integer;

an encoding unit, configured to encode first channel information through the first network model, to obtain to-be-transmitted encoded data; and

a first sending unit, configured to process the encoded data and then send data resulting from the processing of the encoded data to the network device.

56. An information processing apparatus, comprising a memory, a transceiver, and a processor;

wherein the memory is configured to store a computer program; the transceiver is configured to send and receive data under the control of the processor; the processor is configured to read the computer program in the memory and perform the following operations:

sending a downlink signal to a terminal, wherein the downlink signal is used by the terminal to determine a first network model, and the first network model is at least one of I pre-deployed network models, where I is a positive integer;

receiving data resulting from the terminal's processing of encoded data, wherein the encoded data is obtained by the terminal after encoding first channel information according to the first network model;

determining to-be-decoded data based on the data resulting from the terminal's processing of the encoded data;

decoding the to-be-decoded data according to the first network model to obtain restored channel information.

57. The information processing apparatus according to claim 56, wherein the downlink signal is a downlink reference signal; the processor is configured to read the computer program in the memory and perform the following operations:

receiving a first uplink signal sent by the terminal;

determining the first network model based on the first uplink signal.

58. The information processing apparatus according to claim 56, wherein the downlink signal carries second indication information used for indicating the first network model; the processor is configured to read the computer program in the memory and perform the following operations:

receiving a second uplink signal sent by the terminal;

determining third channel information based on the second uplink signal;

determining the first network model based on the third channel information.

**59.** The information processing apparatus according to claim 58, wherein the second uplink signal is an uplink reference signal; or the second uplink signal carries a Precoding Matrix Indicator (PMI).

**60.** The information processing apparatus according to claim 58, wherein the processor is configured to read the computer program in the memory and perform the following operations:

performing encoding and/or decoding based on the third channel information through the I network models respectively to obtain fourth channel information corresponding to each network model;

calculating a target parameter corresponding to each network model based on the third channel information and the fourth channel information corresponding to each network model;

in case that the I network models comprise M ≥ 1 network model whose target parameter meets a preset condition, selecting from the M network models a network model through which the encoding yields the encoded data having a smallest quantity of elements, and determining the selected network model as the first network model;

in case that the I network models comprise M=0 network model whose target parameter meets the preset condition, selecting from the I network models a network model through which the encoding yields the encoded data having a largest quantity of elements, and determining the selected network model as the first network model.

**61.** The information processing apparatus according to claim 60, wherein the processor is configured to read the computer program in the memory and perform the following operation:

calculating, through a target criterion, the target parameter corresponding to each network model based on the third channel information and the fourth channel information corresponding to each network model;

wherein the target criterion is a cosine similarity criterion, or the target criterion is a normalized mean square error criterion, or the target criterion is a broadband signal to interference and noise ratio criterion.

**62.** The information processing apparatus according to claim 58, wherein the first channel information comprises L pieces of channel information, and L is a positive integer; wherein,

in case that different pieces of channel information are encoded and/or decoded through different network models, the second indication information comprises N1 bits, and the N1 bits are used for indicating the network models corresponding to the different pieces of channel information respectively, wherein

$$N1 = \left\lceil \log_2(C_I^L) \right\rceil ;$$

in case that different pieces of channel information are encoded and/or decoded through a same network model, the second indication information comprises N2 bits, and the N2 bits are used for indicating the same network model,

wherein N2 = $\left\lceil \log_2(I) \right\rceil$

**63.** The information processing apparatus according to claim 56, wherein the first channel information comprises L pieces of channel information, and L≥1; the processor is configured to read the computer program in the memory and perform one of the following operations:

when L≥ 1, receiving third indication information sent by the terminal, wherein one piece of channel information corresponds to one piece of third indication information, and the third indication information is used for indicating a quantity of first element and/or a position of the first element in the encoded data, wherein the first element is part or all of elements in the encoded data;

when L> 1, receiving common fourth indication information sent by the terminal for first partial channel information; wherein the first partial channel information is part or all of the L pieces of channel information, and the quantity of the first element and/or the position of the first element in the encoded data resulting from encoding the first partial channel information is the same, the fourth indication information is used for indicating the quantity of the first element and/or the position of the first element in the encoded data;

when L> 1, receiving fifth indication information sent by the terminal that indicates for the L pieces of channel information jointly, wherein the fifth indication information is used for indicating the quantity of the first element and/or the position of the first element in the encoded data resulting from encoding each piece of channel information; or, the fifth indication information is used for indicating a total quantity of the first elements in L encoded data resulting from encoding the L pieces of channel information and/or positions of the first elements in the encoded data.

**64.** The information processing apparatus according to claim 63, wherein the first element comprises one of the followings:

$K_1$ non-zero element in the encoded data, wherein $K_1$ is a positive integer, $K_1 \leq K_0$, $K_0$ is a quantity of all elements in the encoded data;

$K_1$ elements in the encoded data that are determined based on a mask vector;

consecutive $K_1$ elements starting from a first position in the encoded data.

65. The information processing apparatus according to claim 63 or 64, wherein the processor is configured to read the computer program in the memory and perform the following operations:

performing dequantization processing on the data resulting from the terminal's processing of the encoded data to obtain de-quantized data;

determining the to-be-decoded data based on the de-quantized data through the third indication information, or the fourth indication information, or the fifth indication information.

66. The information processing apparatus according to claim 65, wherein the processor is configured to read the computer program in the memory and perform one of the following operations:

determining the to-be-decoded data based on the de-quantized data through a mask vector;

determining the to-be-decoded data based on the de-quantized data through the quantity of the first element;

determining the to-be-decoded data based on the de-quantized data through the position of the first element in the encoded data;

determining the to-be-decoded data based on the de-quantized data through a quantity of non-zero element and a position of the non-zero element in the encoded data;

determining the to-be-decoded data based on the de-quantized data through the quantity of the first element, a quantity of non-zero element among the first element and the position of the non-zero element in the encoded data.

67. The information processing apparatus according to claim 56, wherein the processor is configured to read the computer program in the memory and perform the following operation:

receiving Channel Quality Indicator (CQI) sent by the terminal.

68. The information processing apparatus according to claim 56, wherein the processor is configured to read the computer program in the memory and perform the following operations:

sending a beamformed channel information reference signal to the terminal, wherein a beam used by the channel information reference signal is determined based on the channel information restored by the network device;

receiving the CQI sent by the terminal, wherein the CQI is calculated by the terminal according to the channel information reference signal.

69. The information processing apparatus according to claim 56, wherein the processor is configured to read the computer program in the memory and perform the following operations:

receiving interference-and-noise-related information of a downlink channel sent by the terminal;

calculating CQI based on the interference-and-noise-related information of the downlink channel and the restored channel information.

70. A network device, comprising:

a first sending unit, configured to send a downlink signal to a terminal; wherein the downlink signal is used by the terminal to determine a first network model, and the first network model is at least one of I pre-deployed network models, I is a positive integer;

a first receiving unit, configured to receive data resulting from the terminal's processing of encoded data; wherein the encoded data is obtained by the terminal after encoding first channel information according to the first network model;

a first processing unit, configured to determine to-be-decoded data based on the data resulting from the terminal's processing of the encoded data; and

a decoding unit, configured to decode the to-be-decoded data according to the first network model to obtain restored channel information.

71. A processor-readable storage medium storing a computer program, wherein the computer program is used to cause a processor to execute the steps of the information processing method according to any one of claims 1 to 20, or the steps of the information processing method according to any one of claims 21 to 34.

EP 4 456 458 A1

$$Z = f(X)$$ encoder | decoder | $$\hat{X} = g(Z)$$

**Fig. 1**

**Fig. 2**

receiving, by a terminal,
a downlink signal sent by a network device

31

determining, by the terminal, the first network model
according to the downlink signal

32

encoding, by the terminal,
first channel information through the first network model,
to obtain to-be-transmitted encoded data

33

processing, by the terminal, the encoded data and then
sending, by the terminal, data resulting from the processing of
the encoded data to the network device

34

**Fig. 3**

the i-th encoder

de-quantizer

channel
information $V$

codeword $C$

binary bit
stream

codeword
$C'$

restored channel
information $V'$

quantizer

the i-th decoder

**Fig. 4**

training of adaptive encoder

channel
information $V$

codeword $C$

adaptive encoder

mask vector

**Fig. 5a**

training of adaptive decoder

adaptive decoder

codeword $C'$

mask vector populating

**Fig. 5b**

adaptive encoder

quantizer

mask vector
populating

codeword
$C$

binary bit
stream

codeword
$C'$

restored channel
information $V'$

mask vector

de-quantizer

adaptive decoder

**Fig. 6**

first receiving unit  710

first processing unit  720

encoding unit  730

first sending unit  740

700

Fig. 7

803
processor

801
memory

bus interface

802
transceiver

804
user interface

Fig. 8

```
┌─────────────────────────────────────────────────────┐
│              sending, by a network device,           │  91
│ a downlink signal to a terminal, the downlink signal │
│   is used by the terminal to determine a first       │
│                   network model                      │
└─────────────────────────────────────────────────────┘
                          │
                          ▼
┌─────────────────────────────────────────────────────┐
│             receiving, by the network device,        │  92
│ data resulting from the terminal's processing of     │
│                   encoded data                        │
└─────────────────────────────────────────────────────┘
                          │
                          ▼
┌─────────────────────────────────────────────────────┐
│            determining, by the network device,       │  93
│   to-be-decoded data based on the data resulting     │
│       from the terminal's processing of the          │
│                   encoded data                        │
└─────────────────────────────────────────────────────┘
                          │
                          ▼
┌─────────────────────────────────────────────────────┐
│             decoding, by the network device,         │  94
│ the to-be-decoded data according to the first        │
│   network model to obtain restored channel           │
│                   information                          │
└─────────────────────────────────────────────────────┘
```

Fig. 9

```
┌───────────────────────────────────┐
│  ┌─────────────────────┐  1010    │
│  │  first sending unit  │          │
│  └─────────────────────┘          │
│             │                      │
│             ▼                      │
│  ┌─────────────────────┐  1020    │
│  │ first receiving unit │          │   1010
│  └─────────────────────┘          │
│             │                      │
│             ▼                      │
│  ┌─────────────────────┐  1030    │
│  │ first processing unit│          │
│  └─────────────────────┘          │
│             │                      │
│             ▼                      │
│  ┌─────────────────────┐  1040    │
│  │    decoding unit     │          │
│  └─────────────────────┘          │
└───────────────────────────────────┘
```

Fig. 10

**Fig. 11**

**Fig. 12**

**Fig. 13**

a) | 0 | 1 | 2 | 3 | 4 | 5 | 6 | 7 | 8 | 9 | 10 | 11 | 12 | 13 | 14 | 15 |

b) | 0 | 1 | 2 | 3 | 4 | 5 | 6 | 7 | 8 | 9 | 10 | 11 |

c) | ● | | ● | | ● | ● | | ● | | | ● | |

d) | 1 | 0 | 1 | 0 | 1 | 1 | 0 | 1 | 0 | 0 | 1 | 0 |

**Fig. 14**

## INTERNATIONAL SEARCH REPORT

| International application No. |
| --- |
| **PCT/CN2022/136615** |

| A. | CLASSIFICATION OF SUBJECT MATTER |
| --- | --- |
| | H04L1/00(2006.01)i;H04B7/0413(2017.01)i |

According to International Patent Classification (IPC) or to both national classification and IPC

| B. | FIELDS SEARCHED |
| --- | --- |

Minimum documentation searched (classification system followed by classification symbols)

IPC: H04L H04B

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; IEEE Xplore: 信道, 状态, 信息, 反馈, 模型, 人工智能, 神经网络, 机器学习, 多个, 确定, 选择, 自编码器, 编码, 压缩, 量化, 反量化, 解量化, 解码, 译码, channel, state, information, CSI, MIMO, feedback, model?, AI, neural network+, ML, multi+, determin+, select+, choos+, Auto-encoder, AE, encod+, decod+, compress+, quantiz+, dequantiz+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2021108940 A1 (NOKIA SHANGHAI BELL CO., LTD. et al.) 10 June 2021 (2021-06-10)<br>    description, paragraphs [0032]-[00102], and figures 1-7 | 1-3, 7-12, 18-24, 32-37, 41-46, 52-59, 67-71 |
| A | CN 113660020 A (SHAANXI SHARPEN INFORMATION TECHNOLOGY CO., LTD.) 16 November 2021 (2021-11-16)<br>    entire document | 1-71 |
| A | CN 113381950 A (TSINGHUA UNIVERSITY) 10 September 2021 (2021-09-10)<br>    entire document | 1-71 |
| A | US 2021273707 A1 (QUALCOMM INCORPORATED) 02 September 2021 (2021-09-02)<br>    entire document | 1-71 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 February 2023** | **22 February 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT
### Information on patent family members

International application No.

**PCT/CN2022/136615**

| Patent document cited in search report | | | Publication date (day/month/year) | Patent family member(s) | | | Publication date (day/month/year) |
|---|---|---|---|---|---|---|---|
| WO | 2021108940 | A1 | 10 June 2021 | None | | | |
| CN | 113660020 | A | 16 November 2021 | None | | | |
| CN | 113381950 | A | 10 September 2021 | CN | 113381950 | B | 25 November 2022 |
| US | 2021273707 | A1 | 02 September 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111605575